# EUROPEAN PATENT APPLICATION

(11) **EP 4 685 959 A1**
(43) Date of publication of application: **28.01.2026**
(21) Application number: 24875991.2
(22) Date of filing: 06.05.2024
(51) Int. Cl.: H01M 50/244, H01M 50/528

(54) **BATTERY CELL AND PREPARATION METHOD THEREFOR, AND BATTERY AND ELECTRIC DEVICE COMPRISING SAME**

(30) Priority: 12.10.2023 CN 202311321446
(71) Applicant: Contemporary Amperex Technology Co., Limited, Ningde, Fujian 352100 (CN)
(72) Inventor: YU, Mingxi, Ningde, Fujian 352100 (CN); LUO, Huaen, Ningde, Fujian 352100 (CN); WANG, Tingting, Ningde, Fujian 352100 (CN)
(74) Representative: Kraus & Lederer PartGmbB
(86) International application number: PCT/CN2024/091276
(87) International publication number: WO 2025/077164

(57) **Abstract**

Provided are a battery cell (10), a method for manufacturing a battery cell (10), a battery (100) and an electrical apparatus (1000) comprising same. The battery cell (10) comprises: a case (11) comprising a first wall (111); a terminal post (12) arranged on the first wall (111) and provided with a connecting hole (1223) passing through the terminal post (12), wherein at least part of the inner peripheral wall of the connecting hole (1223) is formed as a first inclined plane (12211), and the first inclined plane (12211) is obliquely arranged relative to the axis of the connecting hole (1223); and an electrode assembly (13) comprising an active material coating portion (131) and a tab (132), wherein the active material coating portion (131) is arranged in the case (11), the tab (132) is electrically connected to the active material coating portion (131), and at least part of the tab (132) extends into the connecting hole (1223) and is connected to the first inclined plane (12211).

## Description

### CROSS-REFERENCE TO RELATED APPLICATION

The present application is filed based on and claims priority to Chinese patent application No. 202311321446.X filed on October 12, 2023, which is incorporated herein by reference in its entirety.

### TECHNICAL FIELD

The present application relates to the technical field of batteries, and more particularly to a battery cell, a method for manufacturing a battery cell, a battery, and an electrical apparatus.

### BACKGROUND

With the increasingly serious environmental problems, the gradual maturity of people's environmental awareness and the rising oil prices, more and more people will focus on new energy vehicles when purchasing vehicles. The advantages and disadvantages of new energy vehicles in terms of endurance mileage and power performance have an important impact on people's choices. At present, most new energy vehicles use power batteries as energy storage and kinetic energy devices. Power batteries are also used in other types of vehicles. The battery energy density of power batteries has an important impact on the vehicle's endurance mileage and power performance. Therefore, improving the energy density of batteries is a direction that needs to be studied in the process of continuous improvement and innovation of batteries.

Currently, batteries are provided with a longer tab structure for connection and assembly with the battery terminal post. The tab is longer and has a certain redundancy, so that it occupies a larger space in the battery, thereby reducing the energy density of the battery.

### SUMMARY

The present application is intended to at least solve one of the technical problems existing in the prior art. To this end, the present application is to propose a battery cell, which can significantly improve the energy density of the battery cell.

The present application further proposes a method for manufacturing the above battery cell.

The present application further proposes a battery having the above battery cell.

The present application further proposes an electrical apparatus having the above battery.

The battery cell according to the first aspect of the present application comprises: a case comprising a first wall; a terminal post arranged on the first wall and formed with a connecting hole passing through the terminal post, wherein at least part of the inner peripheral wall of the connecting hole is formed as a first inclined plane, the first inclined plane is obliquely arranged relative to the axis of the connecting hole; an electrode assembly, comprising an active material coating portion and a tab, wherein the active material coating portion is arranged inside the case, the tab is electrically connected to the active material coating portion, and at least part of the tab extends into the connecting hole and is connected to the first inclined plane.

For the battery cell according to the present application, a connecting hole passing through the terminal post is provided on the terminal post and at least part of the inner wall of the connecting hole is formed as a first inclined plane, and at least part of the tab extends into the connecting hole and is fixed and connected to the first inclined plane. This allows the tab to occupy less space in the battery cell, reducing the weight of the tab and the terminal post, thereby greatly improving the energy density of the battery cell.

In some embodiments of the present application, the tab is connected to the terminal post by welding.

In this embodiment, the tab and the terminal post are connected and fixed by welding, and the connection is firm and reliable. When connected and fixed, the welding connection requires less operation space and has a reliable and fast connection effect, making it more convenient and efficient to connect and fix the tab and the terminal post.

In some embodiments of the present application, in the direction from the electrode assembly toward the terminal post, the first inclined plane obliquely extends outward along the radial direction of the connecting hole.

In this embodiment, the first inclined plane is arranged to extend outward obliquely along the radial direction of the connecting hole, so that the first inclined plane can face an end of the connecting hole away from the electrode assembly. Therefore, when the tab is fixed and connected to the first inclined plane, an external device can more conveniently extend into the connecting hole from a side of the terminal post facing outside the battery cell to be in contact with the tab and operate the tab, thereby making it easier and more convenient to connect and fix the tab and the terminal post.

In some embodiments of the present application, the angle between the first inclined plane and a first plane perpendicular to the axis of the connecting hole is 0°-70°; or the angle between the first inclined plane and the first plane is 30°-60°.

In this embodiment, the angle between the first inclined plane and the first plane perpendicular to the axis of the connecting hole is limited to 0°-70°, which can better meet the needs of welding devices, clamps, etc. for welding and fixing the tab and the terminal post, so that the tab and the terminal post can attain a good and stable welding and fixing effect; the angle between the first inclined plane and the first plane is further limited to make the angle between the first inclined plane and the first plane be within a more suitable angle range, so that the tab can more conveniently and quickly abut against the first inclined plane after extending into the connecting hole, and the welding devices, clamps, etc. can be more conveniently and smoothly arranged to the welding position in the connecting hole to perform welding operations on the tab and the first inclined plane.

In some embodiments of the present application, the terminal post comprises: a terminal post body. The terminal post body is a hollow ring, a raised connecting bump is provided on the inner wall surface of the terminal post body, the terminal post body and the connecting bump match to define the connecting hole, and the first inclined plane is formed on the connecting bump.

In this embodiment, the terminal post body and the connecting bump match to define the connecting hole, the first inclined plane is formed on the connecting bump, the tab can be directly and conveniently attached to the first inclined plane and connected and fixed to the first inclined plane, the connecting bump can well reinforce the structure of the terminal post body, so that the overall structural strength of the terminal post is higher, the first inclined plane is formed on the connecting bump, the connecting bump can well withstand the force when the tab is connected and fixed to the first inclined plane, so that the tab and the first inclined plane can be welded and fixed stably.

In an embodiment of the present application, in the axial direction of the connecting hole, at least part of a side surface of the connecting bump away from the electrode assembly is formed as the first inclined plane.

In this embodiment, the first inclined plane is arranged on a side of the connecting bump away from the electrode assembly, so that the connecting bump can exert a certain separation effect on the tab and the electrode assembly at the connecting hole, so as to reduce the influence and effect on the electrode assembly when connecting the tab and the first inclined plane by welding, so that the electrode assembly is stable during assembly. The connecting bump can also have a certain sealing effect on the terminal post, making the stability of the battery cell better.

In some examples of the present application, the first inclined plane has a welding area, the tab is connected to the welding area by welding, and in the axial direction of the connecting hole, the thickness of the connecting bump at the welding area is a first thickness, and the depth of the weld pool formed at the welding area of the connecting bump when the tab is welded to the connecting bump is a first depth, and the first thickness is greater than the first depth.

In this embodiment, the first thickness is set to be greater than the first depth, so that the connecting bump will not be welded through when the tab is welded and fixed to the first inclined plane, and the connecting bump can maintain good structural strength and a stable connection and fixing effect with the tab, the possibility of welding slag generated after the connecting bump is welded through falling into the electrode assembly is reduced, and the possibility of higher temperature being transferred to the electrode assembly during welding and causing damage to the electrode assembly is reduced, so that the tab and the terminal post can be welded more reliably and stably, making the battery cell maintain good quality.

In an example of the present application, the difference between the first thickness and the first depth is greater than or equal to 0.2 mm.

In this embodiment, the difference between the first thickness and the first depth is set to be greater than or equal to 0.5 mm, so that when the connecting bump is welded and fixed to the tab, the welding device can stably and reliably weld the tab and the first inclined plane and reliably reduce the possibility of welding through the connecting bump, thereby making the battery cell more stable during assembly.

In some specific embodiments of the present application, the difference between the first thickness and the first depth is greater than or equal to 0.5 mm.

In this embodiment, the difference between the first thickness and the first depth is further limited, which can better reduce the possibility of welding devices welding through the connecting bump when welding the tab and the first inclined plane, so that the structure of the battery cell can be more stable and reliable during assembly and welding.

In some examples of the present application, the first inclined plane is arcedly connected to a side surface of the connecting bump facing the electrode assembly.

In this embodiment, the first inclined plane is arcedly connected to a side surface of the connecting bump facing the electrode assembly, so that the transition between the first inclined plane and a side surface of the connecting bump facing the motor assembly can be relatively smooth, thereby reducing the possibility of damaging the tab in the process of matching and fixing the tab and the first inclined plane. The position of the arc connection can provide a certain avoidance space for the tab to bend toward the first inclined plane, so that the tab can be more stably and reliably attached to the first inclined plane, thereby achieving a better welding effect when the tab is welded to the first inclined plane.

In an embodiment of the present application, a side surface of the connecting bump facing the electrode assembly is flush with a side surface of the terminal post body facing the electrode assembly.

In this embodiment, a side surface of the connecting bump facing the electrode assembly is flush with a side surface of the terminal post body facing the electrode assembly, so that the connecting bump can be completely located in the space enclosed by the inner wall of the terminal post body, thereby reducing the extra space occupied by the connecting bump in the battery cell, which can be beneficial to the improvement of the energy density of the battery cell to a certain extent, and makes a side surface of the terminal post facing the electrode assembly be only formed with an opening structure of the connecting hole, so that the tab can be positioned more freely and stably at the opening of the connecting hole, extend from the opening into the connecting hole, and be matched and fixed with the first inclined plane, so that the tab and the terminal post are more convenient to assemble.

In an embodiment of the present application, the minimum width of the connecting hole is greater than or equal to 3 mm.

In this embodiment, the minimum width of the connecting hole is set to be greater than or equal to 3 mm, so that the tab can conveniently and reliably extend into the connecting hole from the opening of the connecting hole and be matched and fixed with the first inclined plane, making it convenient and easy to connect and fix the tab and the terminal post.

In an embodiment of the present application, the ratio of the minimum width of the connecting hole to the thickness of the tab is 1.5-5; or, the ratio of the minimum width of the connecting hole to the thickness of the tab is 2.5-5.

In this embodiment, the ratio of the minimum width of the connecting hole to the thickness of the tab is limited to 1.5-5, so that the connecting hole can have a larger minimum width to facilitate the insertion of the tab. It can be understood that the connecting hole is formed by the inner wall of the terminal post body and the first inclined plane of the connecting bump matched with each other. Limiting the ratio of the minimum width of the connecting hole to the thickness of the tab to 1.5-2 can make the first inclined plane on the connecting bump have sufficient length to facilitate welding and fixing with the tab, so that the tab and the first inclined plane can match well when the tab is welded to the terminal post; further limiting the ratio of the minimum width of the connecting hole to the thickness of the tab to 2.5-5 can better reduce the possibility of the connecting hole wall causing scratch damage to the tab when the tab extends into it, so that the tab can more conveniently and reliably extend into the connecting hole from the opening of the minimum width of the connecting hole and matched and fixed with the first inclined plane.

In an embodiment of the present application, the ratio of the minimum width of the connecting hole to the maximum width of the connecting hole is 0.3-0.5; or, the ratio of the minimum width of the connecting hole to the maximum width of the connecting hole is 0.35-0.45.

In this embodiment, the ratio of the minimum width of the connecting hole to the maximum width of the connecting hole is limited, which can make the design and manufacture of the terminal post convenient. In this embodiment, the ratio of the minimum width to the maximum width of the connecting hole is limited to 0.3-0.5, so that the tab can conveniently and reliably extend into the connecting hole from the opening at the minimum width of the connecting hole and be connected and fixed with the first inclined plane, so that the first inclined plane formed by the connecting bump in the connecting hole can better meet the needs of connection and fixing with the tab while keeping the original terminal post height size unchanged or reducing it, and the opening at the minimum width has a smaller opening structure, so that the connecting hole can maintain a weaker communication between the case accommodating cavity and the external environment to a certain extent, and thus the terminal post can have a certain sealing effect on the battery cell. In this embodiment, the ratio of the minimum width to the maximum width of the connecting hole is further defined, so that the connecting hole can better facilitate the extension of the tab, and the first inclined plane can better and more reliably match with the tab for connection and fixing, so that the overall height size of the terminal post can be well improved and reduced, thereby facilitating the improvement of the energy density of the battery cell.

In an embodiment of the present application, the terminal post further comprises: a first ring, wherein the first ring is connected to an end of the terminal post body facing the electrode assembly, and the first ring extends outward along the radial direction of the terminal post body and extends in a ring shape along the circumferential direction of the terminal post body; a second ring, wherein the second ring is connected to the other end of the terminal post body away from the electrode assembly, and the second ring extends outward along the radial direction of the terminal post body and extends in a ring shape along the circumferential direction of the terminal post body.

In this embodiment, a first ring and a second ring are respectively provided at opposite ends of the terminal post body. The first ring and the second ring can improve the structural strength of the terminal post body to a certain extent to make the overall structural strength of the terminal post better, so that the terminal post and the tab can be connected and fixed more stably and reliably, and the terminal post can better participate in the power transmission operation of the battery cell. The first ring and the second ring can match with the terminal post body to form a clamping groove structure, so as to facilitate the mounting and fixing of the terminal post in the battery cell. The first ring and the second ring have a simple structure and are convenient to use.

In some embodiments of the present application, the battery cell further comprises: a matching block, the matching block is disposed in the connecting hole, and the tab abuts between the matching block and the first inclined plane.

In this embodiment, a matching block is arranged in the connecting hole to match with the first inclined plane to clamp and fix the tab, so that the tab can stably abut against and be fixed onto the first inclined plane under the action of the matching block and maintain a good abutting state, thereby making it easier to weld the tab to the terminal post. The matching block is arranged in the connecting hole, which can further strengthen the structure of the terminal post. At the same time, the matching block can shield the opening at an end of the connecting hole facing the electrode assembly to a certain extent, thereby having a certain sealing effect on the terminal post, reducing the possibility of electrolyte solution leakage in the battery cell at the connecting hole of the terminal post, so that the battery cell has good stability.

In an embodiment of the present application, the matching block has a second inclined plane parallel to the first inclined plane, and the tab abuts between the first inclined plane and the second inclined plane.

A second inclined plane parallel to the first inclined plane is arranged on the matching block, so that the spacing between the first inclined plane and the second inclined plane in the extension direction perpendicular to the first inclined plane can always be the same. Thus, when the tab and the terminal post are welded and fixed, under the matching and pressing action of the second inclined plane and the first inclined plane, the part of the tab falling on the first inclined plane can always remain in contact with and fixed to the first inclined plane in the extension direction of the first inclined plane, so that the welding of the tab and the first inclined plane is more convenient and stable, and the matching block can stably and reliably press and fix the tab through the matching of the second inclined plane with the first inclined plane.

In some examples of the present application, in the axial direction of the connecting hole, the surface of an end of the matching block facing the electrode assembly abuts against the electrode assembly.

In this embodiment, the matching block abuts against the electrode assembly, which can limit and fix the electrode assembly and the tab in the axial direction of the terminal post, and press the tab to a certain extent, so that one end of the tab can more stably extend into the connecting hole, making the electrode assembly more securely placed in the battery cell after assembly.

In an example of the present application, the matching block is connected to the terminal post by welding.

In this embodiment, the matching block and the terminal post are connected and fixed by welding, and the connection is convenient and reliable, so that the matching block can stably and reliably match with the connecting bump to clamp and fix the tab, thereby making it stable and convenient to connect and fix the tab and the terminal post.

In some examples of the present application, a supporting protrusion is formed on the peripheral wall of the connecting hole, the supporting protrusion and the first inclined plane are spaced apart in the circumferential direction of the connecting hole, and one end of the matching block is supported on the supporting protrusion.

In this embodiment, a supporting protrusion is provided in the connecting hole to support and fix the matching block, so that when the matching block and the terminal post are assembled, the supporting protrusion can play a good supporting and limiting role on the matching block, reducing the possibility of excessive downward pressing of the matching block toward the first inclined plane, so that the matching block and the first inclined plane can better match to clamp and fix the tab, and the supporting protrusion can further improve the structural strength of the terminal post to a certain extent, making the structural stability of the terminal post better.

In an example of the present application, the angle of the first inclined plane and the second inclined plane relative to the first plane perpendicular to the axis of the connecting hole is 0°-60°.

In this embodiment, the angle of the first inclined plane and the second inclined plane relative to the first plane perpendicular to the axis of the connecting hole is limited to 0°-60°, so that the angle between the first inclined plane and the first plane and the angle between the second inclined plane and the first plane form acute angles and are within a smaller range, and thus the inclination of the first inclined plane and the second inclined plane in the radial direction of the connecting hole is relatively gentle. When welding the tab and the terminal post, since the welding direction of the welding device is perpendicular to the extension direction of the first inclined plane and the second inclined plane, the welding device can also be tilted at a smaller angle to extend into the connecting hole for welding operations, thereby better reducing the interference of the hole wall of the connecting hole on welding devices, clamps, etc., making it convenient and easy to weld and fix the tab and the terminal post.

In some specific embodiments of the present application, the angle of the first inclined plane and the second inclined plane relative to the first plane is 0°-20°.

In this embodiment, the angle of the first inclined plane and the second inclined plane relative to the first plane is further limited to 0°-20°, so that the first inclined plane and the second inclined plane can extend more smoothly along the radial direction of the connecting hole, and the first inclined plane and the second inclined plane can better face the opening on a side of the connecting hole away from the electrode assembly, so that welding devices, clamps, etc. can more easily, conveniently and quickly reach the welding position of the first inclined plane and the second inclined plane, making the welding and fixing of the tab and the terminal post more convenient and efficient.

In an example of the present application, the other end of the matching block extends to the other side wall of the connecting hole opposite to the supporting protrusion.

By making the other end of the matching block extend to the other side wall of the connecting hole opposite to the supporting protrusion, the matching block and the supporting protrusion match to seal the connecting hole well, so that an end of the first inclined plane tab extending into the connecting hole can be relatively closed between the first inclined plane and the second inclined plane, thereby effectively reducing the probability that the welding point between the tab and the first inclined plane is exposed to the external atmosphere through the connecting hole, making the electrical connection between the tab and the terminal post more stable and reliable. The matching block and the side wall of the connecting hole can achieve a good abutment and fixing effect, so that the matching block can reinforce the structure of the terminal post better, making the overall structure of the terminal post more stable and firmer.

In some specific embodiments of the present application, the matching block, the tab and the terminal post are welded and connected into a whole.

In this embodiment, the matching block, the tab and the terminal post are welded and connected into a whole, so that the matching block is connected and fixed to the tab and the terminal post more firmly and reliably, and the matching block and the terminal post can be fixed to the tab more firmly.

In an embodiment of the present application, the material of the matching block is the same as the material of the terminal post.

In this embodiment, the material of the matching block is set to be the same as the material of the terminal post, which can make it more convenient to weld and fix the matching block to the terminal post, make the welding firmer, and achieve better welding effect.

In some embodiments of the present application, the active material coating portion comprises a current collector and an active material layer disposed on the current collector, the tab is electrically connected to the current collector, the tab comprises a plurality of tab sheets, the plurality of tab sheets converge at a position close to the current collector to form a first converging portion, the plurality of tab sheets converge at a position away from the current collector and are connected to form a second converging portion, the first converging portion connects the second converging portion and the active material coating portion, and at least part of the second converging portion extends into the connecting hole and is connected to the first inclined plane.

In this embodiment, a plurality of tab sheets are gathered together to form a tab, so that the plurality of tab sheets can be reliably connected and fixed to the terminal post through the second converging portion when the tab and the terminal post are welded and fixed, and the second converging portion can have a smaller size and thickness, so that the tab can more easily and conveniently extend into the connecting hole to be in contact with and fixed to the first inclined plane.

In an embodiment of the present application, at least part of the first converging portion extends into the connecting hole and extends along the first inclined plane.

In this embodiment, at least part of the first converging portion extends into the connecting hole and extends along the first inclined plane, so that the tab and the first inclined plane have a longer abutment and fixing size, thereby making the connection and fixing between the tab and the first inclined plane more stable and reliable, and the tab can occupy less space in the case, so that the active material coating portion can be increased in size to improve the energy density of the battery cell. Also, the redundancy of the tab in the case can be further reduced, so that the probability of short circuit between the tab and the active material coating portion is further reduced, thereby making the use of the battery cell more stable and reliable.

In an embodiment of the present application, the ratio of the overlapping width between the second converging portion and the first inclined plane on the first inclined plane to the width of the first inclined plane is greater than or equal to 0.5.

In this embodiment, the ratio of the overlapping width between the second converging portion and the first inclined plane on the first inclined plane to the width of the first inclined plane is limited to be greater than or equal to 0.5, so that the second converging portion and the first inclined plane can have a sufficient overlapping length so that the second converging portion can be stably and firmly connected to the first inclined plane, thereby making the connection and fixing between the tab and the terminal post stable and firm.

In some examples of the present application, the ratio of the overlapping width between the second converging portion and the first inclined plane to the width of the first inclined plane is 0.8-1.2.

This embodiment further limits the ratio of the overlapping width between the second converging portion and the first inclined plane to the width of the first inclined plane, so that the second converging portion and the first inclined plane can be better overlapped and matched, and the second converging portion can maintain a larger overlapping surface and overlapping length with the first inclined plane, and the connection and fixing between the tab and the terminal post are more stable and reliable, and also the redundant size of the first inclined plane or the second converging portion can be reduced, so that the second converging portion and the first inclined plane can be more conveniently matched and abutted, thereby reducing the space occupied by the tab and the terminal post in the battery cell to a certain extent.

In some embodiments of the present application, the battery cell further comprises: a cover plate, wherein the cover plate covers an end of the connecting hole away from the electrode assembly, and the cover plate is hermetically connected to the terminal post.

In this embodiment, the cover plate is provided to be hermetically connected to the terminal post, which can reliably seal the structure composed of the matching block and the tab located in the connecting hole, so that the tab and the terminal post can be in a good closed environment after being welded and fixed, and thus the tab and the terminal post can be stably and well connected during long-term use. The cover plate can match with the terminal post to transmit electricity, and the cover plate can form a good electrical connection surface, so that the battery cell can be more conveniently connected to the electrical connector when in use.

In an embodiment of the present application, a groove is formed on a side surface of the terminal post away from the electrode assembly, the connecting hole is formed on the inner side of the groove and passes through the bottom wall of the groove, and the cover plate is disposed in the groove.

In this embodiment, the groove is arranged on the terminal post, so that it is convenient to position the cover plate and the terminal post when fixing them, and they are connected and fixed stably and reliably.

In some examples of the present application, in the direction from the electrode assembly toward the cover plate, the side wall of the groove obliquely extends outward along the radial direction of the connecting hole.

In this embodiment, the side wall of the groove obliquely extends outward along the radial direction of the connecting hole, which can play a certain guiding role when the cover plate and the terminal post are assembled, so that the cover plate can be fixed in the groove conveniently. The structure is simple and easy to assemble. The cover plate and the terminal post can be welded with high welding quality, so that the cover plate and the terminal post can be welded with a good sealing effect.

In some examples of the present application, a side surface of the cover plate away from the electrode assembly is flush with the surface of an end of the terminal post away from the electrode assembly.

In this embodiment, a side surface of the cover plate away from the electrode assembly is flush with the surface of an end of the terminal post away from the electrode assembly, so that the cover plate and the terminal post can match to form a continuous plane, thereby reducing the space occupied by the cover plate to a certain extent and increasing the electrical connection surface of the terminal post of the battery cell, and thus the energy density of the battery cell can be improved to a certain extent, and the battery cell can be conveniently electrically connected to the electrical connector through an end of the terminal post away from the electrode assembly.

A second aspect of the present application provides a method for manufacturing a battery cell, wherein the battery cell is a battery cell according to the first aspect of the present application, and the manufacturing method comprises: extending one end of the tab into the connecting hole of the terminal post; making a side surface at the end of the tab in the thickness direction abut against the first inclined plane; welding the end of the tab to the first inclined plane.

For the method for manufacturing a battery cell according to the embodiments of the present application, by making the tab extend into the connecting hole of the terminal post and allowing it to abut against the first inclined plane and welding and fixing them, the tab can occupy less space in the battery cell, reducing the weight of the tab and the terminal post, thereby greatly improving the energy density of the battery cell.

In some embodiments of the present application, allowing a side surface at the end of the tab in the thickness direction to abut against the first inclined plane comprises: placing the matching block into the connecting hole, and pressing the end of the tab toward the first inclined plane through the matching block until it abuts against the first inclined plane.

In this embodiment, the matching block presses one end of the tab toward the first inclined plane, so that the tab can stably and reliably come into contact with and abut against the first inclined plane under the action of the matching block. The matching block can reduce the extension degree of the mechanical device used to drive the matching block to move into the connecting hole, thereby making it easier and more convenient for the tab to abut against and be fixed to the first inclined plane.

A third aspect of the present application provides a battery comprising the battery cell according to the first aspect of the present application.

For the battery according to the present application, the above battery cell according to the first aspect is provided, a connecting hole passing through the terminal post is provided on the terminal post and at least part of the inner wall of the connecting hole is formed as a first inclined plane, and at least part of the tab extends into the connecting hole and is fixed and connected to the first inclined plane. This allows the tab to occupy less space in the battery cell, reducing the weight of the tab and the terminal post, thereby greatly improving the energy density of the battery cell.

A fourth aspect of the present application provides an electrical apparatus comprising the battery according to the third aspect of the present application, the battery being used to supply electric energy.

For the electrical apparatus according to the present application, the above battery according to the third aspect is provided, a connecting hole passing through the terminal post is provided on the terminal post and at least part of the inner wall of the connecting hole is formed as a first inclined plane, and at least part of the tab extends into the connecting hole and is fixed and connected to the first inclined plane. This allows the tab to occupy less space in the battery cell, reducing the weight of the tab and the terminal post, thereby greatly improving the energy density of the battery cell.

Additional aspects and advantages of the present application will be set forth in part in the description which follows, and in part will be obvious from the description which follows, or may be learned by practice of the present application.

### BRIEF DESCRIPTION OF DRAWINGS

FIG. 1 is a schematic diagram of an electrical apparatus according to an embodiment of the present application;
FIG. 2 is an exploded view of the battery shown in FIG. 1;
FIG. 3 is a sectional diagram of the battery cell shown in FIG. 2;
FIG. 4 is a schematic diagram of the electrode assembly shown in FIG. 3;
FIG. 5 is a schematic diagram of the terminal post shown in FIG. 3;
FIG. 6 is a schematic diagram of the matching block shown in FIG. 3;
FIG. 7 is a schematic diagram showing the assembly of the electrode assembly, the case and the terminal post shown in FIG. 3;
FIG. 8 is a schematic diagram showing the assembly of the matching block, the case, the terminal post and the electrode assembly shown in FIG. 3;
FIG. 9 is a sectional diagram of a battery cell according to another embodiment of the present application;
FIG. 10 is a schematic diagram of the matching block shown in FIG. 9;
FIG. 11 is a schematic diagram showing the assembly of the case, the terminal post and the electrode assembly shown in FIG. 9;
FIG. 12 is a schematic diagram showing the assembly of the matching block, the case, the terminal post and the electrode assembly shown in FIG. 9;
FIG. 13 is a schematic diagram of a battery cell according to an embodiment of the present application.

### Reference numerals:

10. Battery cell;
11. Case; 111. First wall; 112. Accommodating cavity;
12. Terminal post; 121. First ring; 122. Terminal post body; 1221. Connecting bump; 12211. First inclined plane; 1222. Supporting protrusion; 1223. Connecting hole; 1224. Groove; 123. Second ring;
13. Electrode assembly; 131. Active material coating portion; 132. Tab; 1321. First converging portion; 1322. Second converging portion;
14. Matching block; 141. Second inclined plane;
15. Cover plate;
20. Box body; 201. First box body; 202. Second box body;
100. Battery; 200. Controller; 300. Motor;
1000. Electrical apparatus.

### DETAILED DESCRIPTION

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF

### DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "a plurality of" refers to more than two (including two). Similarly, "a plurality of groups" refers to more than two groups (including two groups), and "a plurality of sheets" refers to more than two sheets (including two sheets).

In the description of the embodiments of the present application, orientation or positional relationships indicated by the technical terms "length", "width", "thickness", "upper", "lower", "front", "rear", "left", "right", "bottom", "axial", "radial", "circumferential", and the like are based on the orientation or positional relationships shown in the accompanying drawing, and are only for the convenience of describing the embodiments of the present application and simplifying the description, and do not indicate or imply that the apparatus or element referred to must have a specific orientation, be constructed and operated in a specific orientation, and therefore cannot be construed as a restriction on the embodiments of the present application.

In the description of the embodiments of the present application, unless otherwise expressly specified and limited, the technical terms "mount," "link," "connect," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

From the perspective of current development of the market situation, the application of power batteries is becoming more and more extensive. Power batteries are not only used in energy storage power systems such as hydropower, thermal power, wind power and solar power stations, but also widely used in electric vehicles such as electric bicycles, electric motorcycles, and electric vehicles, as well as military equipment and aerospace and other fields. As the core component of new energy vehicles, power batteries have high requirements in terms of energy density and reliability.

When the battery cell is processed and manufactured, it is necessary to connect the tab and the terminal post in the case. The tab is composed of a plurality of tab sheets led out from the electrode plate in the battery cell. Usually, an adapter plate is arranged in the battery cell and welded to the plurality of tab sheets, and then the adapter plate is connected to the terminal post by welding. There is also a connection method in which a plurality of tab sheets are ultrasonically pre-welded first and then welded to the adapter plate. In order to meet the process requirements, the tab needs to be led out longer and have a certain redundancy to make the connection between the tab and the adapter plate and the terminal post reliable and stable. The longer tab occupies a larger space when arranged in the battery cell, thereby reducing the energy density of the battery cell, making the energy density of the battery cell lower. At the same time, the adapter plate also further reduces the energy density of the battery cell. The longer tab is prone to short-circuit with the electrode plate, causing short circuit in the battery, which makes the stability of the battery cell poor.

The connection between the tab and the terminal post in the battery cell can also be achieved by a process of pre-welding the tab and laser-welding the terminal post. Specifically, the tab is pre-welded and directly connected to the terminal post by laser welding. This eliminates the use of adapter plates and can greatly improve the energy density of the battery cell. However, the tab still needs to be longer and have a certain redundancy to ensure a reliable and stable connection between the tab and the terminal post. The tab occupies a larger space in the battery cell, which makes the energy density of the battery cell lower.

Based on the above considerations, in order to reduce the space occupied by the tab to improve the energy density of the battery cell, the present application provides a battery cell, where a connecting hole is provided in the terminal post and a first inclined plane is provided in the connecting hole, the tab is fixed and connected to the first inclined plane, so that the tab occupies less space in the battery cell, thereby greatly improving the energy density of the battery cell.

In the present application, the battery cell 100 may include a lithium-ion secondary battery, a lithium-ion battery, a lithium-sulfur battery, a sodium-lithium-ion battery, a sodium-ion battery, a magnesium-ion battery, or the like, which is not limited in embodiments of the present application. The battery cell 100 may be in a cylindrical shape, a flat shape, a cuboid shape, or another shape, which is also not limited in the embodiments of the present application. The battery cells 100 are generally classified into three types depending on the way of encapsulation: cylindrical battery cells, prismatic battery cells, and pouch battery cells, which is not limited in the embodiments of the present application either.

The battery 100 mentioned in the embodiments of the present application refers to a single physical module comprising one or more battery cells 10 to provide higher voltage and capacity. For example, the battery 100 mentioned in the present application may be a battery module, a battery 100 pack, or the like. The battery module usually includes a plurality of battery cells 10. The battery 100 pack generally includes a box body 20 for packaging one or more battery cells 10 or one or more battery modules. The box body 20 can prevent liquids or other foreign matters from affecting charging or discharging of the battery cells 10.

The battery cell 10 disclosed in the embodiments of the present application can be used in an electrical apparatus 1000 that uses a battery 100 as the power source or in various energy storage systems that use batteries 100 as energy storage elements. The electrical apparatus 1000 may be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as a game machine, an electric vehicle toy, an electric ship toy, and an electric airplane toy, etc. The spacecraft may include an airplane, a rocket, a space shuttle and a spaceship, etc.

For the convenience of description in the following embodiments, an electrical apparatus 1000 being a vehicle according to an embodiment of the present application is taken as an example for the description.

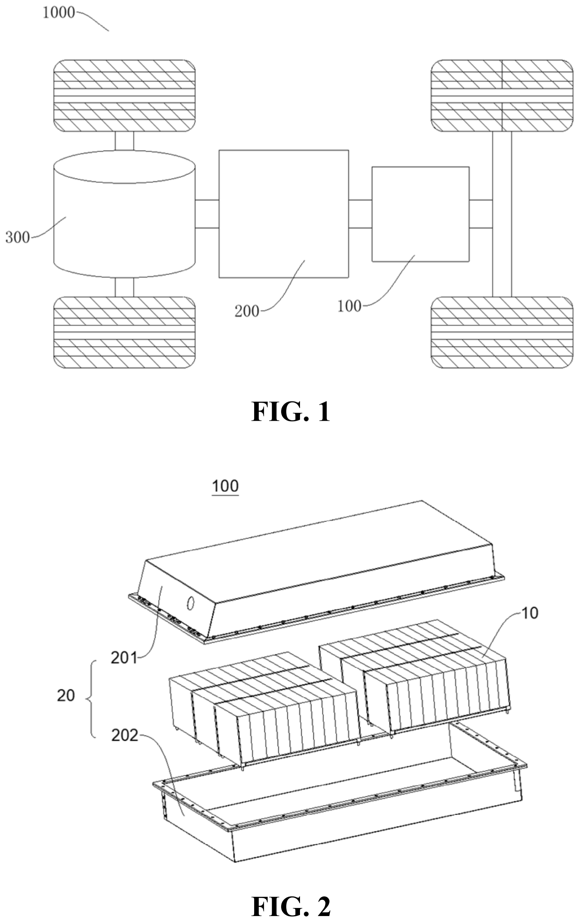

Referring to FIG. 1, FIG. 1 is a schematic diagram of an electrical apparatus 1000 according to an embodiment of the present application. The vehicle may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle. The battery 100 may be provided at the bottom, or head, or tail of the vehicle. The battery 100 may be used to power the vehicle. For example, the battery 100 may be used as an operating power source of the vehicle. The vehicle may further include a controller 200 and a motor 300. The controller 200 is used to control the battery 100 to supply power to the motor 300, for example, for the operating power demand when the vehicle is starting, navigating, and driving.

In some embodiments of the present application, the battery 100 can be used as an operation power supply of the vehicle, can also be used as a driving power supply of the vehicle, and replaces or partially replaces fuel oil or natural gas to provide driving power for the vehicle.

Referring to FIG. 2, FIG. 2 is an exploded view of a battery cell 10 used in a battery 100 according to some embodiments of the present application. The battery 100 includes a box body 20 and a plurality of battery cells 10, where the battery cells 10 are accommodated in the box body 20. The box body 20 is configured to provide an assembling space for the battery cell 10, and the box body 20 may be of a variety of structures. In some embodiments, the box body 20 includes a first box body 201 and a second box body 202. The first box body 201 and the second box body 202 cover each other, and the first box body 201 and the second box body 202 together define an assembling space for accommodating the battery cell 10. The second box body 202 may be of a hollow structure with one end opened. The first box body 201 may be of a platy structure. The first box body 201 covers an open side of the second box body 202, to enable the first box body 201 and the second box body 202 to jointly define an assembling space. Alternatively, both the first box body 201 and the second box body 202 are of a hollow structure with one open side (as shown in FIG. 2). The open side of the first box body 201 covers the open side of the second box body 202. Of course, the box body 20 formed by the first box body 201 and the second box body 202 may be in a variety of shapes, such as a cylinder, a rectangular solid, or the like.

In the battery 100, the plurality of battery cells 10 may be connected in series or in parallel or be in parallel-series connection. The parallel-series connection means that the plurality of battery cells 10 are connected in both series and parallel. The plurality of battery cells 10 may be directly connected in series, in parallel, or in parallel-series connection, and then an entirety formed by the plurality of battery cells 10 is accommodated in the box body 20. Alternatively, the battery 100 may also be in a form of a battery module formed by connecting a plurality of battery cells 10 in series, in parallel, or in parallel-series connection, and then a plurality of battery modules are connected in series, in parallel, or in parallel-series connection to form an entirety which is accommodated in the box body 20. The battery 100 may further include other structures. For example, the battery 100 may further include a bus component and an electrical connector for electrically connecting the plurality of battery cells 10.

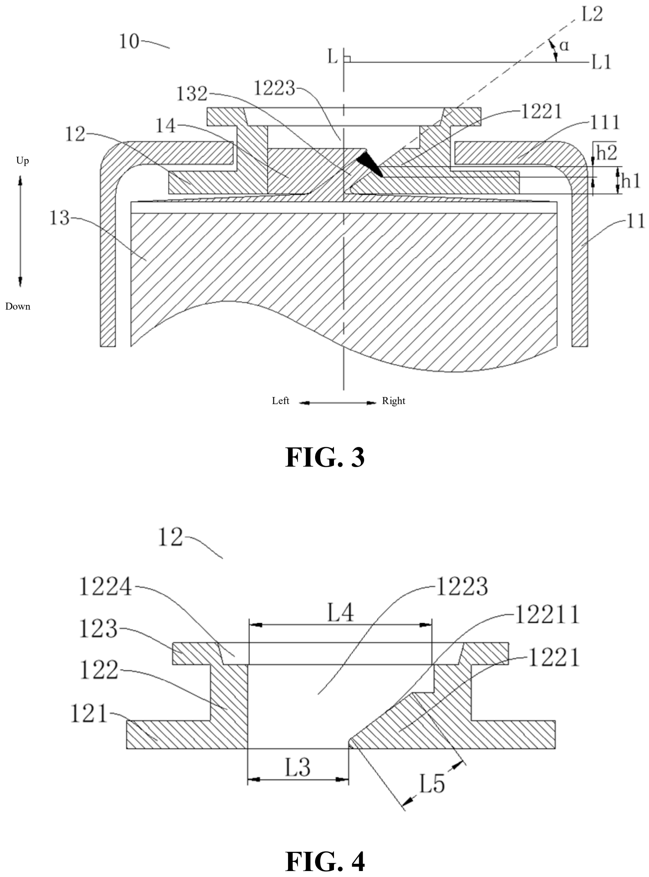

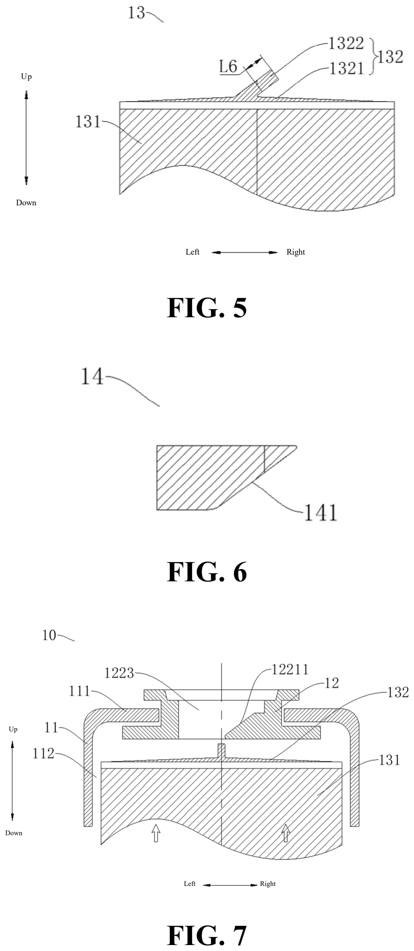

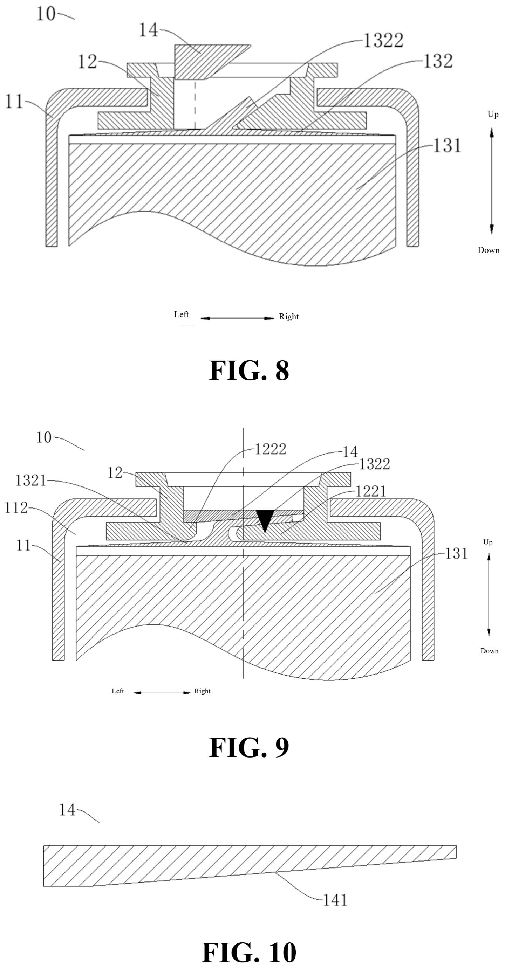

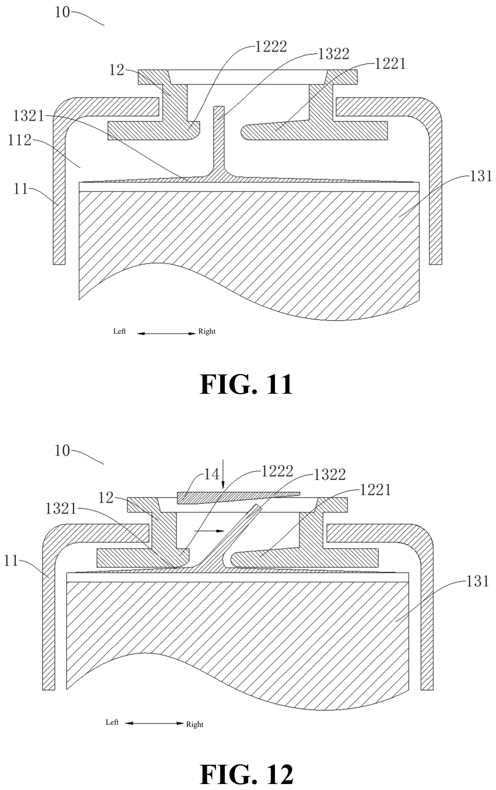

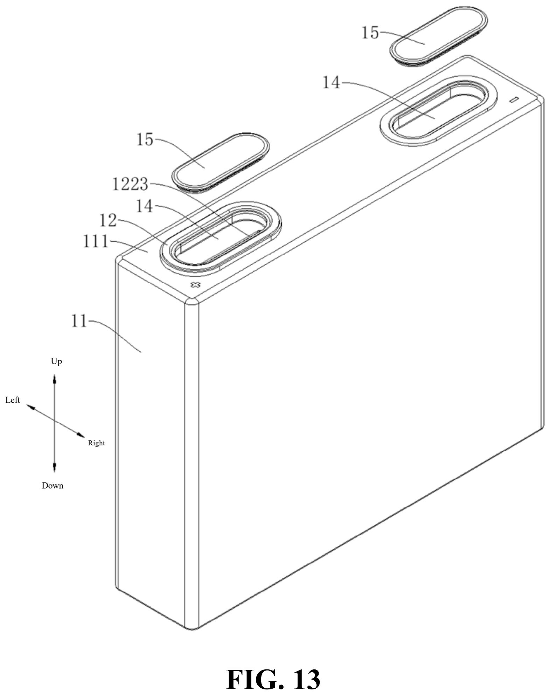

The battery cell 10 according to the embodiments of the first aspect of the present application will be described below with reference to FIG. 3 to FIG. 11. FIG. 3 is a sectional diagram of the battery cell 10 shown in FIG. 2; FIG. 4 is a schematic diagram of the electrode assembly 13 shown in FIG. 3; FIG. 5 is a schematic diagram of the terminal post 12 shown in FIG. 3; FIG. 6 is a schematic diagram of the matching block 14 shown in FIG. 3; FIG. 7 is a schematic diagram showing the assembly of the electrode assembly 13, the case 11 and the terminal post 12 shown in FIG. 3; FIG, 8 is a schematic diagram showing the assembly of the matching block 14, the case 11, the terminal post 12 and the electrode assembly 13 shown in FIG. 3; FIG. 9 is a sectional diagram of a battery cell 10 according to another embodiment of the present application; FIG. 10 is a schematic diagram of the matching block 14 shown in FIG. 9; FIG. 11 is a schematic diagram showing the assembly of the case 11, the terminal post 12 and the electrode assembly 13 shown in FIG. 9; FIG12 is a schematic diagram showing the assembly of the matching block 14, the case 11, the terminal post 12 and the electrode assembly 13 shown in FIG. 9; FIG. 13 is a schematic diagram of a battery cell 10 according to an embodiment of the present application.

As shown in FIG. 3 to FIG. 13, the battery cell 10 according to the embodiments of the first aspect of the present application comprises: a case 11, a terminal post 12 and an electrode assembly 13. Specifically, the case 11 comprises a first wall 111; the terminal post 12 is arranged on the first wall 111 and provided with a connecting hole 1223 passing through the terminal post 12, at least part of the inner peripheral wall of the connecting hole 1223 is formed as a first inclined plane 12211, and the first inclined plane 12211 is obliquely arranged relative to the axis of the connecting hole 1223; the electrode assembly 13 comprises an active material coating portion 131 and a tab 132, the active material coating portion 131 is arranged in the case 11, the tab 132 is electrically connected to the active material coating portion 131, and at least part of the tab 132 extends into the connecting hole 1223 and is connected to the first inclined plane 12211.

The shape of the case 11 can be adjusted according to the type of the battery cell 10. For example, when the battery cell 10 is a square battery 100, the case 11 is square. When the battery cell 10 is a cylindrical battery 100, the case 11 is cylindrical. The embodiments of the present application are described by taking the square case 11 as an example. Referring to FIG. 3, the case 11 can be an aluminum case, a stainless steel case, etc. The case 11 is used to accommodate the electrode assembly 13 in the battery cell 10 and fix the terminal post 12. The first wall 111 of the case 11 is formed at one end of the case 11 in the length direction (the up-down direction as shown in FIG. 3). When the battery cell 10 is assembled, the electrode assembly 13 can be placed in the accommodating cavity 112 of the case 11, and the terminal post 12 is fixed on the first wall 111 of the case 11. Specifically, the first wall 111 of the case 11 can be provided with a mounting hole that runs through the first wall 111 along the thickness direction of the first wall 111 (the up-down direction as shown in FIG. 3). The terminal post 12 is arranged in the mounting hole and fixed and connected to the case 11. For example, the terminal post 12 and the case 11 can be fixed by welding or riveting

The terminal post 12 is used to connect the battery cell 10 to the electrical connector and transmit electric energy. The terminal post 12 can be made of copper, aluminum, zinc, or alloys thereof. The shape of the terminal post 12 can be circular, rectangular, or other shapes according to design requirements. Generally, the number of terminal posts 12 is at least two. Specifically, the terminal post 12 includes at least one positive terminal post and at least one negative terminal post. For example, when the number of terminal posts 12 is two, one is a positive terminal post and the other is a negative terminal post, and the two are electrically connected to the positive and negative tabs 132 of the electrode assembly 13, respectively. For another example, when the number of terminal posts 12 is four, two may be positive terminal posts and two may be negative terminal posts. At this time, the two positive terminal posts are both electrically connected to the positive tabs of the battery cell assembly, and the two negative terminal posts are both electrically connected to the negative tabs of the battery cell assembly.

The electrode assembly 13 is usually formed by stacking or winding electrode plates and a separator. The electrode plates include a positive electrode plate and a negative electrode plate. The positive tab led out from the positive electrode plate is electrically connected to the positive terminal post, and the negative tab led out from the negative electrode plate is electrically connected to the negative terminal post.

The positive electrode plate generally comprises a positive electrode collector and a positive electrode active material layer. The positive electrode active material layer can be directly or indirectly coated on the positive electrode collector to form a positive electrode active material coating portion of the electrode assembly 13. The portion of the positive electrode collector that is not coated with the positive electrode active material layer protrudes from the positive electrode active material coating portion to form a positive tab sheet. A plurality of positive tab sheets are stacked together to form a positive tab, whereby the positive tab is led out from the positive electrode plate and electrically connected to the positive electrode active material coating portion. The materials of the positive electrode collector and the positive electrode active material coating portion are set accordingly according to the type of battery cell 10. For example, when the battery 100 is a lithium-ion battery, the material of the positive electrode collector can be aluminum, and the material of the positive electrode active material coating portion can be lithium cobalt oxide, lithium iron phosphate, ternary lithium or lithium manganate, etc.

The negative electrode plate generally comprises a negative electrode collector and a negative electrode active material layer. The negative electrode active material layer can be directly or indirectly coated on the negative electrode collector to form a negative electrode active material coating portion of the electrode assembly 13. The portion of the negative electrode collector that is not coated with the negative electrode active material layer protrudes from the negative electrode active material coating portion to form a negative tab sheet. A plurality of negative tab sheets are stacked together to form a negative tab, whereby the negative tab is led out from the negative electrode plate and electrically connected to the negative electrode active material coating portion. The materials of the negative electrode collector and the negative electrode active material coating portion are set accordingly according to the type of battery cell 10. For example, when the battery 100 is a lithium-ion battery, the material of the negative electrode collector can be copper, and the material of the negative electrode active material coating portion can be carbon or silicon, etc. The material of the separator is not limited, and for example, the separator may be polypropylene film, polyethylene film, or the like.

For the convenience of description, the embodiments in the present application will not distinguish between the positive and negative electrodes of the terminal post 12, the tab 132 and the electrode plate. The terminal post 12, the tab 132 and the electrode plate and the related descriptions involved in the embodiments of the present application can be applied to structures such as the positive tab, the positive terminal post, the positive electrode plate, or to structures such as the negative tab, the negative terminal post, the negative electrode plate, or to structures such as the positive and negative tabs 132, the positive and negative terminal posts 12 and the positive and negative electrode plates.

In this embodiment, at least part of the tab 132 extends into the connecting hole 1223, that is, the tab 132 may partially extend into the connecting hole 1223, or the tab 132 may fully extend into the connecting hole 1223.

In this embodiment, a connecting hole 1223 passing through the terminal post 12 is formed on the terminal post 12, and the shape of the connecting hole 1223 can match the shape of the terminal post 12, and at least part of the inner peripheral wall of the connecting hole 1223 is formed as a first inclined plane 12211, that is, the inner peripheral wall of the connecting hole 1223 can partially form the first inclined plane 12211, and the inner peripheral wall of the connecting hole 1223 can also be completely formed with the first inclined plane 12211. Here, "completely" means that the first inclined plane 12211 can extend from one end of the axial direction of the connecting hole 1223 to the other end. The inclination angle and size of the first inclined plane 12211 can be reasonably set as needed. When the tab 132 is fixed and connected to the first inclined plane 12211, the tab 132 extends into the connecting hole 1223 of the terminal post 12 and tilts toward the first inclined plane 12211, so that the tab 132 can come into contact with the first inclined plane 12211. After the tab 132 comes into contact with the first inclined plane 12211, the tab 132 and the first inclined plane 12211 can be connected by welding, riveting, bolting, etc.

In this embodiment, a case 11 is provided. As an indispensable component of the battery cell 10, the case 11 can facilitate the assembly and fixing of the electrode assembly 13 and the terminal post 12 in the battery cell 10. The case 11 can provide good protection and sealing for the electrode assembly 13, thereby enabling the battery cell 10 to maintain a stable structural state and use state during processing, transportation and use. The structure is simple and the use effect is good.

In this embodiment, the terminal post 12 is provided with a through connecting hole 1223, which can reduce the weight of the terminal post 12, thereby improving the energy density of the battery cell 10 to a certain extent. At least part of the tab 132 extends into the connecting hole 1223 of the terminal post 12 and is connected and fixed to the terminal post 12, so that the tab 132 and the terminal post 12 in the battery cell 10 can partially overlap in the arrangement space, thereby greatly reducing the space occupied by the tab 132 in the battery cell 10, greatly improving the energy density of the battery cell 10.

It can be understood that when the tab 132 is connected and fixed to the terminal post 12, the tab 132 and the terminal post 12 need to have a sufficient connection and fixing surface. Specifically, the length of fixing and connection between the tab 132 and the terminal post 12 needs to meet certain requirements. In this embodiment, when at least part of the tab 132 extends into the connecting hole 1223 of the terminal post 12 and is connected and fixed to the terminal post 12, the height size of the terminal post 12 needs to be adaptively adjusted according to the size of the tab 132 in the height direction of the terminal post 12. When the size of the tab 132 in the height direction of the terminal post 12 (the up-down direction as shown in FIG. 3) is longer, the height of the terminal post 12 needs to be set higher, which will increase the weight and volume of the terminal post 12, thereby reducing the energy density of the battery cell 10. Here, the height size of the terminal post 12 refers to the length size of the terminal post 12 in the axial direction of the connecting hole 1223.

In this embodiment, at least part of the inner wall of the connecting hole 1223 of the terminal post 12 is formed with a first inclined plane 12211, and the first inclined plane 12211 is obliquely arranged relative to the axis of the connecting hole 1223, so that the first inclined plane 12211 has a shorter length in the axial direction of the connecting hole 1223 and a longer length in the inclination direction. When at least part of the tab 132 extends into the connecting hole 1223 and is fixed and connected to the first inclined plane 12211, the tab 132 can be fixed to the first inclined plane 12211 along the inclination direction of the first inclined plane 12211, so that it can have a sufficient connection and fixing length with the first inclined plane 12211, and the tab 132 can be stably and reliably connected and fixed to the terminal post 12. The tab 132 has a smaller arrangement size in the axial direction of the connecting hole 1223, so that the height size of the terminal post 12 can be set according to the conventional size or shortened to a certain extent, and thus the weight and volume of the terminal post 12 can remain unchanged or reduced. Therefore, the method of fixing and connecting the tab 132 to the first inclined plane 12211 can make the battery cell 10 have a higher energy density.

Since the tab 132 extends into the connecting hole 1223 and is fixed on the first inclined plane 12211, it is more stable and convenient to fix and assemble the tab 132 and the terminal post 12, which can reduce the possibility of the tab 132 falling off. In addition, when the tab 132 is processed and manufactured, the length of the tab 132 required for connection and fixing can be determined more conveniently, thereby reducing the length redundancy of the tab 132, reducing the weight and volume of the tab 132 to a certain extent, and further improving the energy density of the battery cell 10.

It can be understood that the electrode plates in the battery cell 10 include a positive electrode plate and a negative electrode plate. In this embodiment, after the tab 132 is electrically connected to the first inclined plane 12211, it can have a better separation effect with the electrode plate of the other polarity in the case 11, thereby effectively reducing the probability of short circuit in the battery cell 10 and making the battery cell 10 more stable.

For the battery cell 10 according to the embodiments of the present application, a connecting hole 1223 passing through the terminal post 12 is provided on the terminal post 12 and at least part of the inner wall of the connecting hole 1223 is formed as a first inclined plane 12211, and at least part of the tab 132 extends into the connecting hole 1223 and is fixed and connected to the first inclined plane 12211. This allows the tab 132 to occupy less space in the battery cell 10, reducing the weight of the tab 132 and the terminal post 12, thereby greatly improving the energy density of the battery cell 10.

In some embodiments of the present application, the tab 132 may be connected to the terminal post 12 by welding.

The tab 132 is connected to the terminal post 12 by welding. For example, the tab 132 and the terminal post 12 can be welded and fixed by ultrasonic welding, laser welding, electric resistance and fusion welding or other welding methods.

In this embodiment, the tab 132 and the terminal post 12 are connected and fixed by welding, and the connection is firm and reliable. When connected and fixed, the welding connection requires less operation space and has a reliable and fast connection effect, making it more convenient and efficient to connect and fix the tab 132 and the terminal post 12.

In some embodiments of the present application, as shown in FIG. 3 to FIG. 5, in the direction from the electrode assembly 13 toward the terminal post 12, the first inclined plane 12211 may extend outward obliquely along the radial direction of the connecting hole 1223 (the left-right direction as shown in FIG. 3).

Referring to FIG. 3 and FIG. 4, the direction of the electrode assembly 13 facing the terminal post 12 refers to the direction from a side of the terminal post 12 facing the inside of the battery cell 10 toward a side outside the battery cell 10 in the axial direction of the connecting hole 1223 (the up-down direction as shown in FIG. 3). In this embodiment, the first inclined plane 12211 obliquely extends outward along the radial direction of the connecting hole 1223, and the tab 132 extends into the connecting hole 1223 from a side of the first inclined plane 12211 facing the electrode assembly 13 and obliquely extends outward along the radial direction of the connecting hole 1223 toward the first inclined plane 12211. In the actual assembly process, the tab 132 can first extend into the connecting hole 1223 along the axial direction of the connecting hole 1223, and the tab 132 is then bent toward the first inclined plane 12211 to fit with the first inclined plane 12211, thereby being fixed to the first inclined plane 12211.

In this embodiment, the first inclined plane 12211 is arranged to extend outward obliquely along the radial direction of the connecting hole 1223, so that the first inclined plane 12211 can face an end of the connecting hole 1223 away from the electrode assembly 13. Therefore, when the tab 132 is fixed and connected to the first inclined plane 12211, an external device can more conveniently extend into the connecting hole 1223 from a side of the terminal post 12 facing outside the battery cell 10 to be in contact with the tab 132 and operate the tab 132, thereby making it easier and more convenient to connect and fix the tab 132 and the terminal post 12.

In some embodiments of the present application, the angle between the first inclined plane 12211 and the first plane perpendicular to the axis of the connecting hole 1223 may be 0°-70°.

In this embodiment, the angle between the first inclined plane 12211 and the first plane perpendicular to the axis of the connecting hole 1223 is limited to 0°-70°. For example, the angle can be 10°, 20°, 30°, 40°, 50°, 60°, etc. Referring to FIG. 3, the straight line L represents the axis of the connecting hole 1223, the straight line L1 represents the first plane, the first plane is perpendicular to the axis, and the extension line L2 of the first inclined plane 12211 toward the first plane forms an angle α with the first plane L1.

It can be understood that when the tab 132 is welded and fixed to the terminal post 12, the welding position of the tab 132 and the terminal post 12 is in the connecting hole 1223 of the terminal post 12, and the hole wall of the connecting hole 1223 causes certain obstacles and interference to the arrangement and movement of welding devices, clamps, etc. In this embodiment, the angle between the first inclined plane 12211 and the first plane perpendicular to the axis of the connecting hole 1223 is limited to 0°-70°, which can better meet the needs of welding devices, clamps, etc. for welding and fixing the tab 132 and the terminal post 12, so that the tab 132 and the terminal post 12 can be welded and fixed stably.

In an embodiment of the present application, the angle between the first inclined plane 12211 and the first plane may be 30°-60°.

In this embodiment, the angle between the first inclined plane 12211 and the first plane perpendicular to the axis of the connecting hole 1223 is limited to 30°-60°. For example, the angle can be 30°, 35°, 40°, 45°, 50°, 55°, 60°, etc.

This embodiment further limits the angle between the first inclined plane 12211 and the first plane, so that the angle between the first inclined plane 12211 and the first plane is within a more suitable angle range, and thus the tab 132 can more conveniently and quickly abut against the first inclined plane 12211 after extending into the connecting hole 1223, and welding devices, clamps, etc. can be more conveniently and smoothly arranged at the welding position in the connecting hole 1223 to perform welding operations on the tab 132 and the first inclined plane 12211.

In some embodiments of the present application, as shown in FIG. 5, the terminal post 12 may comprise: a terminal post body 122, the terminal post body 122 is a hollow ring, and a raised connecting bump 1221 is provided on the inner wall surface of the terminal post body 122, the terminal post body 122 and the connecting bump 1221 match to define a connecting hole 1223, and a first inclined plane 12211 is formed on the connecting bump 1221.

The terminal post body 122 is configured to be a hollow ring. For example, the cross section of the terminal post body 122 may be formed into a ring structure such as a circular ring, a waist-shaped frame, a rectangular frame. The connecting bump 1221 is arranged on the inner wall surface of the terminal post body 122. Specifically, a side of the connecting bump 1221 close to the inner wall surface of the terminal post body 122 can fit with the inner wall surface of the terminal post body 122 and be connected to the inner wall surface of the terminal post body 122. The connecting bump 1221 can be separately arranged from the terminal post body 122, and the connecting bump 1221 can also form an integrated structure with the terminal post body 122. The material of the connecting bump 1221 can be the same as or different from the material of the terminal post body 122.

In this embodiment, the terminal post body 122 matches with the connecting bump 1221 to define a connecting hole 1223, and a first inclined plane 12211 is formed on the connecting bump 1221. Specifically, referring to FIG. 3 and FIG. 4, the first inclined plane 12211 is located on a side of the connecting bump 1221 away from the electrode assembly 13 in the axial direction of the terminal post 12. The first inclined plane 12211 can be formed as a part of the hole wall of the connecting hole 1223. After the tab 132 extends into the connecting hole 1223, the tab 132 can directly and conveniently abut against the first inclined plane 12211 and be connected and fixed to the first inclined plane 12211.

In this embodiment, a raised connecting bump 1221 is provided on the inner wall surface of the terminal post body 122. The connecting bump 1221 can well reinforce the structure of the terminal post body 122, so that the overall structural strength of the terminal post 12 is higher. The first inclined plane 12211 is formed on the connecting bump 1221. The connecting bump 1221 can well withstand the force when the tab 132 is connected and fixed to the first inclined plane 12211, so that the tab 132 and the first inclined plane 12211 can be welded and fixed more stably.

In an embodiment of the present application, as shown in FIG. 4, in the axial direction of the connecting hole 1223 (the up-down direction as shown in FIG. 3), at least part of a side surface of the connecting bump 1221 away from the electrode assembly 13 may be formed as the first inclined plane 12211.

At least part of a side surface of the connecting bump 1221 away from the electrode assembly 13 is formed as the first inclined plane 12211, that is, a side surface of the connecting bump 1221 away from the electrode assembly 13 can be formed as the first inclined plane 12211, and a part of a side surface of the connecting bump 1221 away from the electrode assembly 13 can also be formed as the first inclined plane 12211, for example, a part of a side surface of the connecting bump 1221 away from the electrode assembly 13 is formed as the first inclined plane and the other portion is formed as a flat surface, a curved surface, a folded surface, etc.

In this embodiment, the first inclined plane 12211 is arranged on a side of the connecting bump 1221 away from the electrode assembly 13, so that the connecting bump 1221 can exert a certain separation effect on the tab 132 and the electrode assembly 13 at the connecting hole 1223, so as to reduce the influence and effect on the electrode assembly 13 when connecting the tab 132 and the first inclined plane 12211 by welding, so that the electrode assembly 13 is stable during assembly. The connecting bump 1221 can also have a certain sealing effect on the terminal post 12, making the stability of the battery cell 10 better.

In some examples of the present application, referring to FIG. 3 and FIG. 4, the first inclined plane 12211 may have a welding area, the tab 132 is connected to the welding area by welding, and in the axial direction of the connecting hole 1223, the thickness of the connecting bump 1221 at the welding area is a first thickness, the depth of the weld pool formed at the welding area of the connecting bump 1221 when the tab 132 is welded to the connecting bump 1221 is a first depth, and the first thickness is greater than the first depth.

The welding area refers to the area where the tab 132 and the first inclined plane 12211 are welded and connected. When welding the tab 132 and the first inclined plane 12211, the welding device quickly melts the tab 132 and the first inclined plane 12211 in the welding area, evaporates and solidifies them, so that the tab 132 and the first inclined plane 12211 are connected and fixed. The thickness of the connection bump 1221 at the welding area refers to the thickness of the connection bump 1221 at the welding area in the axial direction of the connecting hole 1223. The weld pool depth refers to the distance between the deepest position of the fusion portion of the base material and the surface of the base material. The weld pool depth in this embodiment refers to the size of fusion of the welding area of the connecting bump 1221 in the axial direction of the connecting hole 1223, as shown in FIG. 3, where h1 represents the first thickness and h2 represents the first depth.

In this embodiment, the first thickness is set to be greater than the first depth, so that the connecting bump 1221 will not be welded through when the tab 132 is welded and fixed to the first inclined plane 12211, and the connecting bump 1221 can maintain good structural strength and a stable connection and fixing effect with the tab 132, the possibility of welding slag generated after the connecting bump 1221 is welded through falling into the electrode assembly 13 is reduced, and the possibility of higher temperature being transferred to the electrode assembly 13 during welding and causing damage to the electrode assembly 13 is reduced, so that the tab 132 and the terminal post 12 can be welded more reliably and stably, making the battery cell 10 maintain good quality.

In an example of the present application, the difference between the first thickness and the first depth may be greater than or equal to 0.2 mm.

In this embodiment, the difference between the first thickness and the first depth is set to be greater than or equal to 0.2 mm. For example, the difference between the first thickness and the first depth can be 0.3 mm, 0.4 mm, 0.5 mm, 0.6 mm, 0.7 mm, 0.8 mm, 0.9 mm, 1.0 mm, etc.

In this embodiment, the difference between the first thickness and the first depth is set to be greater than or equal to 0.5 mm, so that when the connecting bump 1221 is welded and fixed to the tab 132, the welding device can stably and reliably weld the tab 132 and the first inclined plane 12211 and reliably reduce the possibility of welding through the connecting bump 1221, thereby making the battery cell 10 more stable during assembly.

In some specific embodiments of the present application, the difference between the first thickness and the first depth may be greater than or equal to 0.5 mm.

In this embodiment, the difference between the first thickness and the first depth is set to be greater than or equal to 0.5 mm. For example, the difference between the first thickness and the first depth can be 0.5 mm, 0.6 mm, 0.7 mm, 0.8 mm, 0.9 mm, 1.0 mm, etc.

In this embodiment, the difference between the first thickness and the first depth is further limited, which can better reduce the possibility of welding devices welding through the connecting bump 1221 when welding the tab 132 and the first inclined plane 12211, so that the structure of the battery cell 10 can be more stable and reliable during assembly and welding.

In some examples of the present application, as shown in FIG. 4, the first inclined plane 12211 and a side surface of the connecting bump 1221 facing the electrode assembly 13 may be arcedly connected.

Specifically, referring to FIG. 3 and FIG. 4, a side of the first inclined plane 12211 facing the electrode assembly 13 can be arcedly connected to a side surface of the connecting bump 1221 facing the electrode assembly 13. The arc can be a semi-circular arc, a quarter-circular arc, etc. The radius of the arc can be reasonably set according to the welding and connection requirements of the tab 132 and the first inclined plane 12211. When the tab 132 is matched and fixed with the first inclined plane 12211, a part of the tab 132 located on a side of the terminal post 12 facing the electrode assembly 13 and a part of the tab 132 extending into the connecting hole 1223 clamp the connecting bump 1221, a side of the tab 132 facing the first inclined plane 12211 and a side of the tab 132 facing the connecting bump 1221 form an angle, and the site where the first inclined plane 12211 and the surface of a site of the connecting bump 1221 facing the electrode assembly 13 are arcedly connected is located at the angle formed by the tab 132.

In this embodiment, the first inclined plane 12211 is arcedly connected to a side surface of the connecting bump 1221 facing the electrode assembly 13, so that the transition between the first inclined plane 12211 and a side surface of the connecting bump 1221 facing the motor assembly can be relatively smooth, thereby reducing the possibility of damaging the tab 132 in the process of matching and fixing the tab 132 and the first inclined plane 12211. The position of the arc connection can provide a certain avoidance space for the tab 132 to bend toward the first inclined plane 12211, so that the tab 132 can be more stably and reliably attached to the first inclined plane 12211, thereby achieving a better welding effect when the tab 132 is welded to the first inclined plane 12211.

In an embodiment of the present application, as shown in FIG. 4, a side surface of the connecting bump 1221 facing the electrode assembly 13 may be flush with a side surface of the terminal post body 122 facing the electrode assembly 13.

As shown in FIG. 4, a side surface of the terminal post body 122 facing the electrode assembly 13 is formed with an opening of a connecting hole 1223, a side surface of the connecting bump 1221 facing the electrode assembly 13 is flush with a side surface of the terminal post body 122 facing the electrode assembly 13, and matches a side surface of the terminal post body 122 facing the electrode assembly 13 to form the opening of the connecting hole 1223, the distance between a side surface of the connecting bump 1221 facing the electrode assembly 13 and the electrode assembly 13 is the same as the distance between a side surface of the terminal post body 122 facing the electrode assembly 13 and the electrode assembly 13, and the tab 132 led out from a side of the electrode assembly 13 facing the terminal post body 122 extends into the connecting hole 1223 from the opening of the connecting hole 1223 and is matched and fixed with the first inclined plane 12211 of the connecting bump 1221.

In this embodiment, a side surface of the connecting bump 1221 facing the electrode assembly 13 is flush with a side surface of the terminal post body 122 facing the electrode assembly 13, so that the connecting bump 1221 can be completely located in the space enclosed by the inner wall of the terminal post body 122, thereby reducing the extra space occupied by the connecting bump 1221 in the battery cell 10, which can be beneficial to the improvement of the energy density of the battery cell 10 to a certain extent, and makes a side surface of the terminal post 12 facing the electrode assembly 13 be only formed with an opening structure of the connecting hole 1223, so that the tab 132 can be positioned more freely and stably at the opening of the connecting hole 1223, extend from the opening into the connecting hole 1223 and be matched and fixed with the first inclined plane 12211, so that the tab 132 and the terminal post 12 are more convenient to assemble.

In an embodiment of the present application, the minimum width of the connecting hole 1223 may be greater than or equal to 3 mm.

The width of the connecting hole 1223 refers to the width in the radial direction of the terminal post 12. Since the first inclined plane 12211 is formed as a part of the inner wall of the connecting hole 1223, the first inclined plane 12211 obliquely extends outward along the radial direction of the terminal post 12 from a side of the terminal post body 122 facing the electrode assembly 13 toward a side of the terminal post body 122 away from the electrode assembly 13, and the width of the connecting hole 1223 gradually increases along the axial direction of the connecting hole 1223 toward the direction away from the electrode assembly 13. That is to say, the width of the opening position of the connecting hole 1223 formed by matching with the connecting bump 1221 on a side of the terminal post body 122 facing the electrode assembly 13 is the minimum width of the connecting hole 1223. When the tab 132 is connected to the terminal post 12 by welding, the tab 132 needs to extend into the connecting hole 1223 from the opening position with the minimum width of the connecting hole 1223 and be matched and fixed with the first inclined plane 12211. Referring to FIG. 4, L3 indicates the minimum width of the connecting hole 1223. For example, the minimum width L3 of the connecting hole 1223 may be 3 mm, 3.2 mm, 3.4 mm, 3.6 mm, 3.8 mm, 4 mm, and so on.

In this embodiment, the minimum width of the connecting hole 1223 is set to be greater than or equal to 3 mm, so that the tab 132 can conveniently and reliably extend into the connecting hole 1223 from the opening of the connecting hole 1223 and be matched and fixed with the first inclined plane 12211, making it convenient and easy to connect and fix the tab 132 and the terminal post 12.

In an embodiment of the present application, the ratio of the minimum width of the connecting hole 1223 to the thickness of the tab 132 may be 1.5-5.

The thickness of the tab 132 refers to the distance between a side surface of the tab 132 that is in contact with the first inclined plane 12211 and a side surface of the tab 132 away from the first inclined plane 12211. For example, the ratio of the minimum width of the connecting hole 1223 to the thickness of the tab 132 may be 1.5, 2, 2.5, 3, 3.5, 4, 4.5, 5, and so on.

In this embodiment, the ratio of the minimum width of the connecting hole 1223 to the thickness of the tab 132 is limited to 1.5-5, so that the connecting hole 1223 can have a larger minimum width to facilitate the insertion of the tab 132. It can be understood that the connecting hole 1223 is formed by matching the inner wall of the terminal post body 122 and the first inclined plane 12211 of the connecting bump 1221. Limiting the ratio of the minimum width of the connecting hole 1223 to the thickness of the tab 132 to 1.5-5 can make the first inclined plane 12211 on the connecting bump 1221 have sufficient length to facilitate welding and fixing with the tab 132, so that the tab 132 and the first inclined plane 12211 match well when the tab 132 is welded to the terminal post 12.

In some examples of the present application, the ratio of the minimum width of the connecting hole 1223 to the thickness of the tab 132 may be 2.5-5.

In this embodiment, the ratio of the minimum width of the connecting hole 1223 to the thickness of the tab 132 is limited to be 2.5-5. For example, the ratio of the minimum width of the connecting hole 1223 to the thickness of the tab 132 can be 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, and so on.

In this embodiment, the ratio of the minimum width of the connecting hole 1223 to the thickness of the tab 132 is further limited to 2.5-5, which can better reduce the possibility of the tab 132 being damaged by the wall of the connecting hole 1223 when the tab 132 extends into it, and enable the tab 132 to more conveniently and reliably extend into the connecting hole 1223 from the opening position of the minimum width of the connecting hole 1223 and be matched and fixed with the first inclined plane 12211.

In an embodiment of the present application, the ratio of the minimum width of the connecting hole 1223 to the maximum width of the connecting hole 1223 may be 0.3-0.5.

The maximum width of the connecting hole 1223 refers to the maximum width size of the connecting hole 1223 in the radial direction of the terminal post 12, as shown in FIG. 4, L4 is schematically shown as the maximum width of the connecting hole 1223. The maximum width of the connecting hole 1223 can be formed at an opening on a side of the connecting hole 1223 away from the electrode assembly 13. The ratio of the minimum width of the connecting hole 1223 to the maximum width of the connecting hole 1223 can be 0.3, 0.35, 0.4, 0.45, 0.5, etc., and the ratio is less than or equal to 0.5. That is, the opening at an end of the connecting hole 1223 facing the electrode assembly 13 is smaller than half of the opening at an end of the connecting hole 1223 away from the electrode assembly 13.

In this embodiment, the ratio of the minimum width of the connecting hole 1223 to the maximum width of the connecting hole 1223 is limited, so that during the processing and manufacturing of the terminal post 12, the overall width of the connecting hole 1223 can be more conveniently determined according to the required width size of the opening on a side of the connecting hole 1223 facing the electrode assembly 13 to carry out manufacturing and production, making the design and manufacturing of the terminal post 12 more convenient.

In this embodiment, the ratio of the minimum width to the maximum width of the connecting hole 1223 is limited to 0.3-0.5, so that the tab 132 can more conveniently and reliably extend from the opening at the minimum width of the connecting hole 1223 into the connecting hole 1223 and be connected and fixed to the first inclined plane 12211, and the first inclined plane 12211 formed by the connecting bump 1221 in the connecting hole 1223 can better meet the needs of connection and fixing with the tab 132 while keeping the original height size of the terminal post 12 unchanged or reducing it, and the opening at the minimum width has a smaller opening structure, so that the connecting hole 1223 can maintain a weaker communication effect on the accommodating cavity 112 of the case 11 and the external environment to a certain extent, and thus the terminal post 12 can have a certain sealing effect on the battery cell 10.

In some examples of the present application, the ratio of the minimum width of the connecting hole 1223 to the maximum width of the connecting hole 1223 may be 0.35-0.45.

For example, the ratio of the minimum width to the maximum width of the connecting hole 1223 may be 0.35, 0.36, 0.37, 0.38, 0.39, 0.4, 0.41, 0.42, 0.43, 0.44, 0.45, and so on.

This embodiment further limits the ratio of the minimum width to the maximum width of the connecting hole 1223, so that the connecting hole 1223 can better facilitate the extension of the tab 132, the first inclined plane 12211 can better and more reliably match with the tab 132 for connection and fixing, and thus the overall height size of the terminal post 12 can be greatly improved and reduced, thereby facilitating the improvement of the energy density of the battery cell 10.

In an embodiment of the present application, referring to FIG. 3 and FIG. 4, the terminal post 12 may further comprise: a first ring 121 and a second ring 123. The first ring 121 is connected to an end of the terminal post body 122 facing the electrode assembly 13, and the first ring 121 extends outward along the radial direction of the terminal post body 122 and extends in a ring shape along the circumferential direction of the terminal post body 122; the second ring 123 is connected to the other end of the terminal post body 122 away from the electrode assembly 13, and the second ring 123 extends outward along the radial direction of the terminal post body 122 and extends in a ring shape along the circumferential direction of the terminal post body 122.

A side surface of the first ring 121 facing the electrode assembly 13 may be flush with a side surface of the terminal post body 122 facing the electrode assembly 13, the shape of the first ring 121 may match the shape of the terminal post body 122, the first ring 121 and the terminal post body 122 may be separately provided or integrally formed, the material of the first ring 121 may be the same as or different from the material of the terminal post body 122, the thickness of the first ring 121 along the axial direction of the terminal post body 122 may be reasonably set according to the mounting and assembly requirements of the terminal post 12, optionally, the first ring 121 may be formed by flanging one end of the terminal post body 122 facing the electrode assembly 13 outward along the radial direction of the terminal post body 122.

A side surface of the second ring 123 facing the electrode assembly 13 may be flush with a side surface of the terminal post body 122 away from the electrode assembly 13, the shape of the second ring 123 may match the shape of the terminal post body 122, the second ring 123 and the terminal post body 122 may be separately provided or integrally formed, the material of the second ring 123 may be the same as or different from the material of the terminal post body 122, the thickness of the second ring 123 along the axial direction of the terminal post body 122 may be reasonably set according to the mounting and assembly requirements of the terminal post 12, optionally, the second ring 123 may be formed by flanging one end of the terminal post body 122 away from the electrode assembly 13 outward along the radial direction of the terminal post body 122.

In this embodiment, a first ring 121 and a second ring 123 are respectively provided at opposite ends of the terminal post body 122. The first ring 121 and the second ring 123 can improve the structural strength of the terminal post body 122 to a certain extent to make the overall structural strength of the terminal post 12 better, so that the terminal post 12 and the tab 132 can be connected and fixed more stably and reliably, and the terminal post 12 can better participate in the power transmission operation of the battery cell 10. The first ring 121 and the second ring 123 can match with the terminal post body 122 to form a clamping groove structure, so as to facilitate the mounting and fixing of the terminal post 12 in the battery cell 10. The first ring 121 and the second ring 123 have a simple structure and are convenient to use.

In some embodiments of the present application, as shown in FIG. 3, the battery cell 10 may further comprise: a matching block 14, the matching block 14 is disposed in the connecting hole 1223, and the tab 132 abuts between the matching block 14 and the first inclined plane 12211.

The shape of the matching block 14 can match the connecting hole 1223 and the first inclined plane 12211. The matching block 14 can be made of the same material as the terminal post 12. The matching block 14 can be fixed and connected to the terminal post body 122. The matching block 14 can also be fixed and connected to the terminal post body 122 and the tab 132. When the tab 132 is welded to the terminal post 12, the matching block 14 is placed in the connecting hole 1223, and a side surface of the matching block 14 facing the first inclined plane 12211 matches with the first inclined plane 12211 to clamp and fix the tab 132.

In this embodiment, a matching block 14 is arranged in the connecting hole 1223 to match with the first inclined plane 12211 to clamp and fix the tab 132, so that the tab 132 can stably abut against and be fixed onto the first inclined plane 12211 under the action of the matching block 14 and maintain a good abutting state, thereby making it easier to weld the tab 132 to the terminal post 12. The matching block 14 is arranged in the connecting hole 1223, which can further strengthen the structure of the terminal post 12. At the same time, the matching block 14 can shield the opening at an end of the connecting hole 1223 facing the electrode assembly 13 to a certain extent, thereby having a certain sealing effect on the terminal post 12, reducing the possibility of electrolyte solution leakage in the battery cell 10 at the connecting hole 1223 of the terminal post 12, so that the battery cell 10 has good stability.

In an embodiment of the present application, as shown in FIG. 3 and FIG. 6, the matching block 14 has a second inclined plane 141 parallel to the first inclined plane 12211, and the tab 132 may abut between the first inclined plane 12211 and the second inclined plane 141.

The second inclined plane 141 can be a flat surface or a curved surface. In the axial direction of the terminal post 12, an end of the second inclined plane 141 facing the electrode assembly 13 can be flush with an end of the first inclined plane 12211 facing the electrode assembly 13, and an end of the second inclined plane 141 away from the electrode assembly 13 can be flush with an end of the first inclined plane 12211 away from the electrode assembly 13 or be located within the extension range of the first inclined plane 12211. Optionally, in this embodiment, the second inclined plane 141 and the first inclined plane 12211 are both flat surfaces.

A second inclined plane 141 parallel to the first inclined plane 12211 is arranged on the matching block 14, so that the spacing between the first inclined plane 12211 and the second inclined plane 141 in the extension direction perpendicular to the first inclined plane 12211 can always be the same. Thus, when the tab 132 and the terminal post 12 are welded and fixed, under the matching and pressing action of the second inclined plane 141 and the first inclined plane 12211, the part of the tab 132 falling on the first inclined plane 12211 can always remain in contact with and fixed to the first inclined plane 12211 in the extension direction of the first inclined plane 12211, so that the welding of the tab 132 and the first inclined plane 12211 is more convenient and stable, and the matching block 14 can stably and reliably press and fix the tab 132 through the matching of the second inclined plane 141 with the first inclined plane 12211.

In some examples of the present application, referring to FIG. 3, in the axial direction of the connecting hole 1223, the surface of an end of the matching block 14 facing the electrode assembly 13 may abut against the electrode assembly 13.

The surface of an end of the matching block 14 facing the electrode assembly 13 abuts against the electrode assembly 13. Specifically, the surface of an end of the matching block 14 facing the electrode assembly 13 can be flush with the surface of an end of the terminal post body 122 facing the electrode assembly 13. When the battery cell 10 is assembled, an end of the matching block 14 facing the electrode assembly 13 and an end of the terminal post body 122 facing the electrode assembly 13 match to abut against the electrode assembly 13, and an end portion of the tab 132 led out from an end of the electrode assembly 13 facing the terminal post 12 extends into the connecting hole 1223 and is clamped between the first inclined plane 12211 and the second inclined plane 141.

In this embodiment, the matching block 14 abuts against the electrode assembly 13, which can limit and fix the electrode assembly 13 and the tab 132 in the axial direction of the terminal post 12, and press the tab 132 to a certain extent, so that the tab 132 can more stably extend into the connecting hole 1223, making the electrode assembly 13 more securely placed in the battery cell 10 after assembly.

In an example of the present application, the matching block 14 may be connected to the terminal post 12 by welding.

The matching block 14 is connected to the terminal post 12 by welding. For example, the tab 132 and the terminal post 12 can be welded and fixed by ultrasonic welding, laser welding, electric resistance and fusion welding or other welding methods.

In this embodiment, the matching block 14 and the terminal post 12 are connected and fixed by welding, and the connection is convenient and reliable, so that the matching block 14 can stably and reliably match with the connecting bump 1221 to clamp and fix the tab 132, thereby making it stable and convenient to connect and fix the tab 132 and the terminal post 12.

In some examples of the present application, as shown in FIG. 9, a supporting protrusion 1222 can be formed on the peripheral wall of the connecting hole 1223, the supporting protrusion 1222 and the first inclined plane 12211 are spaced apart in the circumferential direction of the connecting hole 1223, and one end of the matching block 14 is supported on the supporting protrusion 1222.

A supporting protrusion 1222 is formed on the peripheral wall of the connecting hole 1223. Specifically, the supporting protrusion 1222 can be an arc-shaped protrusion, a rectangular protrusion, a polygonal protrusion, etc. The supporting protrusion 1222 can extend inward along the radial direction of the connecting hole 1223. As shown in FIG. 9, a side surface of the supporting protrusion 1222 facing the electrode assembly 13 in the axial direction of the connecting hole 1223 can be arranged flush with a side surface of the terminal post body 122 facing the electrode assembly 13, a side surface of the supporting protrusion 1222 away from the electrode assembly 13 can support and fix one end of the matching block 14 in the radial direction of the connecting hole 1223, and a side surface of the supporting protrusion 1222 that supports and abuts against the matching block 14 can be set according to the shape of the surface of a side of the matching block 14 facing the electrode assembly 13 to support and fix the matching block 14.

In this embodiment, the supporting protrusion 1222 and the first inclined plane 12211 are spaced apart in the circumferential direction of the connecting hole 1223, that is, there is a distance between an end of the supporting protrusion 1222 facing the first inclined plane 12211 and an end of the first inclined plane 12211 facing the supporting protrusion 1222 in the radial direction of the connecting hole 1223. During assembly, the tab 132 can extend into the connecting hole 1223 from the space defined by the supporting protrusion 1222 and the first inclined plane 12211 in the radial direction of the connecting hole 1223, and the matching block 14 is placed in the connecting hole 1223 to press and fix the tab 132 toward the first inclined plane 12211, and one end of the matching block 14 is matched and fixed with the supporting protrusion 1222.

In this embodiment, a supporting protrusion 1222 is provided in the connecting hole 1223 to support and fix the matching block 14, so that when the matching block 14 and the terminal post 12 are assembled, the supporting protrusion can play a good supporting and limiting role on the matching block 14, reducing the possibility of excessive downward pressing of the matching block 14 toward the first inclined plane 12211, so that the matching block 14 and the first inclined plane 12211 can better match to clamp and fix the tab 132, and the supporting protrusion 1222 can further improve the structural strength of the terminal post 12 to a certain extent, making the structural stability of the terminal post 12 better.

In an example of the present application, as shown in FIG. 9, a side surface of the supporting protrusion 1222 facing the electrode assembly 13 and a side surface of the supporting protrusion 1222 facing the first inclined plane 12211 may be arcedly connected.

A side surface of the supporting protrusion 1222 facing the electrode assembly 13 is arcedly connected to a side surface of the supporting protrusion 1222 facing the first inclined plane 12211. The arc may be a semi-circular arc, a quarter-circular arc, etc. The radius of the arc may be reasonably set according to the need for the tab 132 to extend into the connecting hole 1223 and the need for fixing the matching block 14 to the supporting protrusion 1222.

In this embodiment, a side surface of the supporting protrusion 1222 facing the electrode assembly 13 is arcedly connected to a side surface of the supporting protrusion 1222 facing the first inclined plane 12211, which can reduce the possibility of friction and damage between the tab 132 and the supporting protrusion 1222 when extending into the connecting hole 1223 from between the supporting protrusion 1222 and the connecting bump 1221, so that the tab 132 can be connected and assembled with the terminal post 12 more easily and conveniently.

In an example of the present application, referring to FIG. 3 and FIG. 9, the angle of the first inclined plane 12211 and the second inclined plane 141 relative to the first plane perpendicular to the axis of the connecting hole 1223 may be 0°-60°.

For example, the angle of the first inclined plane 12211 and the second inclined plane 141 relative to the first plane perpendicular to the axis of the connecting hole 1223 may be 10°, 20°, 30°, 40°, 50°, 60°, etc.

In this embodiment, the angle of the first inclined plane 12211 and the second inclined plane 141 relative to the first plane perpendicular to the axis of the connecting hole 1223 is limited to 0°-60°, so that the angle between the first inclined plane 12211 and the first plane and the angle between the second inclined plane 141 and the first plane form acute angles and are within a smaller range, and thus the inclination of the first inclined plane 12211 and the second inclined plane 141 in the radial direction of the connecting hole 1223 is relatively gentle. When welding the tab 132 and the terminal post 12, since the welding direction of the welding device is perpendicular to the extension direction of the first inclined plane 12211 and the second inclined plane 141, the welding device can also be tilted at a smaller angle to extend into the connecting hole 1223 for welding operations, thereby better reducing the interference of the hole wall of the connecting hole 1223 on welding devices, clamps, etc., making it convenient and easy to weld and fix the tab 132 and the terminal post 12.

In some specific embodiments of the present application, the angle of the first inclined plane 12211 and the second inclined plane 141 relative to the first plane is 0°-20°.

For example, the angle of the first inclined plane 12211 and the second inclined plane 141 relative to the first plane perpendicular to the axis of the connecting hole 1223 may be 2°, 4°, 6°, 8°, 10°, 12°, 14°, 16°, 18°, etc.

In this embodiment, the angle of the first inclined plane 12211 and the second inclined plane 141 relative to the first plane is further limited to 0°-20°, so that the first inclined plane 12211 and the second inclined plane 141 can extend more smoothly along the radial direction of the connecting hole 1223, and the first inclined plane 12211 and the second inclined plane 141 can better face the opening on a side of the connecting hole 1223 away from the electrode assembly 13, so that welding devices, clamps, etc. can more easily, conveniently and quickly extend into and reach the welding position of the first inclined plane 12211 and the second inclined plane 141, making the welding and fixing of the tab 132 and the terminal post 12 more convenient and efficient.

In an example of the present application, referring to FIG. 9, the other end of the matching block 14 may extend to the other side wall of the connecting hole 1223 opposite to the supporting protrusion 1222.

The other end of the matching block 14 extends to the other side wall of the connecting hole 1223 opposite to the supporting protrusion 1222. Specifically, in the radial direction of the connecting hole 1223, one end of the matching block 14 can extend to a side wall of the connecting hole 1223 on which the supporting protrusion 1222 is formed, and the other end of the matching block 14 can extend to the other side wall of the connecting hole 1223 opposite to the supporting protrusion 1222.

By making the other end of the matching block 14 extend to the other side wall of the connecting hole 1223 opposite to the supporting protrusion 1222, the matching block 14 and the supporting protrusion 1222 match to seal the connecting hole 1223 well, so that an end of the tab 132 extending into the connecting hole 1223 can be relatively closed between the first inclined plane 12211 and the second inclined plane 141, thereby effectively reducing the probability that the welding point between the tab 132 and the first inclined plane 12211 is exposed to the external atmosphere through the connecting hole 1223, making the electrical connection between the tab 132 and the terminal post 12 more stable and reliable. The matching block 14 and the side wall of the connecting hole 1223 can achieve a good abutment and fixing effect, so that the matching block 14 can reinforce the structure of the terminal post 12 better, making the overall structure of the terminal post 12 more stable and firmer.

In some specific embodiments of the present application, as shown in FIG. 3 and FIG. 9, the matching block 14, the tab 132 and the terminal post 12 may be welded and connected into a whole.

After the matching block 14 is assembled with the tab 132 and the terminal post 12, the matching block 14 can be welded and fixed to the terminal post body 122, the tab 132 can be welded and fixed to the connecting bump 1221 of the terminal post 12, or the tab 132 can be welded and fixed to the matching block 14 and the connecting bump 1221. When welding the matching block 14, the tab 132 and the connecting bump 1221, the welding device can weld and fix the matching block 14, the tab 132 and the connecting bump 1221 together from a side of the matching block 14 away from the tab 132, and the matching block 14, the tab 132 and the connecting bump 1221 can be connected by a single weld.

In this embodiment, the matching block 14, the tab 132 and the terminal post 12 are welded and connected into a whole, so that the matching block 14 is connected and fixed to the tab 132 and the terminal post 12 more firmly and reliably, and the matching block 14 and the terminal post 12 can be fixed to the tab 132 more firmly.

In an embodiment of the present application, the material of the matching block 14 may be the same as the material of the terminal post 12.

For example, when the terminal post 12 is made of copper, the matching block 14 may also be made of copper; when the terminal post 12 is made of aluminum alloy, the matching block 14 may also be made of aluminum alloy, and so on.

In this embodiment, the material of the matching block 14 is set to be the same as the material of the terminal post 12, which can make it more convenient to weld and fix the matching block 14 to the terminal post 12, make the welding firmer, and achieve better welding effect.

In some embodiments of the present application, as shown in FIG. 3, the active material coating portion 131 comprises a current collector and an active material layer disposed on the current collector, the tab 132 is electrically connected to the current collector, the tab 132 comprises a plurality of tab sheets, the plurality of tab sheets converge at a position close to the current collector to form a first converging portion 1321, the plurality of tab sheets converge at a position away from the current collector and are connected to form a second converging portion 1322, the first converging portion 1321 connects the second converging portion 1322 and the active material coating portion 131, and at least part of the second converging portion 1322 extends into the connecting hole 1223 and is connected to the first inclined plane 12211.

The tab 132 includes a plurality of tab sheets, for example, the number of the tab sheets may be three, four, five, six, seven, eight, and so on.

The tab 132 is led out from the current collector, as shown in FIG. 3, a plurality of tab sheets converge from a side surface of the active material coating portion 131 facing the terminal post 12 toward the connecting hole 1223 of the terminal post 12, and the spacing between the plurality of tab sheets gradually decreases until they are stacked and closely attached to each other. During the processing of the tab 132, the tab 132 is pre-welded at the stacked and attached portion to form the second converging portion 1322, and in the direction from the active material coating portion 131 toward the terminal post 12, a portion where a certain spacing exists between the plurality of tab sheets and a portion of the stacked and attached portion of the tab 132 that is not pre-welded form the first converging portion 1321.

When the tab 132 is welded and fixed to the terminal post 12, the second converging portion 1322 of the tab 132 can partially extend into the connecting hole 1223 and be connected and fixed to the first inclined plane 12211, or the second converging portion 1322 of the tab 132 can fully extend into the connecting hole 1223 and be connected and fixed to the first inclined plane 12211.

In this embodiment, a plurality of tab sheets are gathered together to form a tab 132, so that the plurality of tab sheets can be reliably connected and fixed to the terminal post 12 through the second converging portion 1322 when the tab 132 and the terminal post 12 are welded and fixed, and the second converging portion 1322 can have a smaller size and thickness, so that the tab 132 can more easily and conveniently extend into the connecting hole 1223 to be in contact with and fixed to the first inclined plane 12211.

Optionally, the position where the first converging portion 1321 is connected to the second converging portion 1322 may be arranged corresponding to the opening on a side of the connecting hole 1223 facing the electrode assembly 13. That is to say, on the projection plane perpendicular to the axial direction of the terminal post 12, the projection of the connection position between the first converging portion 1321 and the second converging portion 1322 on the projection plane is located within the projection range of the opening on one side of the connecting hole 1223. When the tab 132 is connected and assembled with the terminal post 12, the second converging portion 1322 extends from the opening of the connecting hole 1223 on one side with the opening of the connecting hole 1223 into the connecting hole 1223 and is connected and fixed to the terminal post 12.

In this way, the second converging portion 1322 can extend into the connecting hole 1223 at a shorter distance, thereby reducing the redundancy of the tab 132 and lowering the cost, and improving the energy density of the battery cell 10 to a certain extent.

In an embodiment of the present application, referring to FIG. 3 and FIG. 9, at least part of the first converging portion 1321 may extend into the connecting hole 1223 and extend along the first inclined plane 12211.

At least part of the first converging portion 1321 extends into the connecting hole 1223 and extends along the first inclined plane 12211, that is, the first converging portion 1321 may partially extend into the connecting hole 1223, or the first converging portion 1321 may fully extend into the connecting hole 1223.

In this embodiment, at least part of the first converging portion 1321 extends into the connecting hole 1223 and extends along the first inclined plane 12211, so that the tab 132 and the first inclined plane 12211 have a longer abutment and fixing size, thereby making the connection and fixing between the tab 132 and the first inclined plane 12211 more stable and reliable, and the tab 132 can occupy less space in the case 11, so that the active material coating portion 131 can be increased in size to improve the energy density of the battery cell 10. Also, the redundancy of the tab 132 in the case 11 can be further reduced, so that the probability of short circuit between the tab 132 and the active material coating portion 131 is further reduced, thereby making the use of the battery cell 10 more stable and reliable.

In an embodiment of the present application, the ratio of the overlapping width between the second converging portion 1322 and the first inclined plane 12211 on the first inclined plane 12211 to the width of the first inclined plane 12211 is greater than or equal to 0.5.

The overlapping width between the second converging portion 1322 and the first inclined plane 12211 refers to the length size of the second converging portion 1322 extending along the first inclined plane 12211, and the width of the first inclined plane 12211 refers to the length size of the first inclined plane 12211 extending along the axial direction of the terminal post 12. Referring to FIG. 4 and FIG. 5, L5 in FIG. 4 represents the width of the first inclined plane 12211, and L6 in FIG. 5 represents the overlapping width. The ratio of the overlapping width of the second converging portion 1322 on the first inclined plane 12211 to the width of the first inclined plane 12211 is greater than or equal to 0.5, for example, the ratio can be 0.5, 0.6, 0.7, 0.8, 0.9, 1, etc.

In this embodiment, the ratio of the overlapping width between the second converging portion 1322 and the first inclined plane 12211 on the first inclined plane 12211 to the width of the first inclined plane 12211 is limited to be greater than or equal to 0.5, so that the second converging portion 1322 and the first inclined plane 12211 can have a sufficient overlapping length so that the second converging portion 1322 can be stably and firmly connected to the first inclined plane 12211, thereby making the connection and fixing between the tab 132 and the terminal post 12 stable and firm.

In some examples of the present application, the ratio of the overlapping width between the second converging portion 1322 and the first inclined plane 12211 to the width of the first inclined plane 12211 is 0.8-1.2.

The ratio of the overlapping width between the second converging portion 1322 and the first inclined plane 12211 to the width of the first inclined plane 12211 is 0.8-1.2, for example, the ratio may be 0.8, 0.9, 1, 1.1, 1.2, and so on.

This embodiment further limits the ratio of the overlapping width between the second converging portion 1322 and the first inclined plane 12211 to the width of the first inclined plane 12211, so that the second converging portion 1322 and the first inclined plane 12211 can be better overlapped and matched, and the second converging portion 1322 can maintain a larger overlapping surface and overlapping length with the first inclined plane 12211, and the connection and fixing between the tab 132 and the terminal post 12 are more stable and reliable, and also the redundant size of the first inclined plane 12211 or the second converging portion 1322 can be reduced, so that the second converging portion 1322 and the first inclined plane 12211 can be more conveniently matched and abutted, thereby reducing the space occupied by the tab 132 and the terminal post 12 in the battery cell 10 to a certain extent.

In an embodiment of the present application, a plurality of tab sheets of the tab 132 may be pre-welded and connected at the second converging portion 1322.

Before the tab 132 is welded and assembled with the terminal post 12, a plurality of tab sheets are stacked and gathered to form the second converging portion 1322, and the welding device pre-welds and connects the plurality of tab sheets at the second converging portion 1322 to connect the plurality of tab sheets at the second converging portion 1322 of the tab 132 facing the terminal post 12. Optionally, the plurality of tab sheets at the second converging portion 1322 may be welded and connected by ultrasonic pre-welding.

It can be understood that the pre-welding width required for pre-welding of the plurality of tab sheets is relatively small, and the pre-welding and connection of the plurality of tab sheets of the tab 132 at the second converging portion 1322 can shorten the size of the tab 132 to a certain extent during processing and manufacturing of the tab 132, thereby making the tab 132 shorter and smaller, and further making the height size of the terminal post 12 matched and fixed with the tab 132 shorter, thereby further improving the energy density of the battery cell 10.

In this embodiment, the second converging portion 1322 of the tab 132 is pre-welded to reduce the interlayer gap, so that the fluffy plurality of tab sheets form a plate structure with a certain rigidity at the second converging portion 1322. As a result, the second converging portion 1322 of the tab 132 is not easy to move or stretch relatively during the overall movement or bending process, so that the second converging portion 1322 has better integrity, and the second converging portion 1322 can be more stably bent toward the first inclined plane 12211 or welded and connected 51 to the first inclined plane 12211, etc., which effectively reduces the possibility of cracking when the tab 132 is welded to the terminal post 12, and makes the welding and fixing of the tab 132 to the terminal post 12 more stable and reliable. Optionally, the plurality of tab sheets may also be connected and fixed at the second converging portion 1322 by bonding with conductive adhesive or other methods, which are not listed here one by one.

In an embodiment of the present application, the pre-welding width of the second converging portion 1322 may be greater than or equal to 1.5 mm.

In this embodiment, the pre-welding width of the second converging portion 1322 is greater than or equal to 1.5 mm. For example, the pre-welding width may be 1.5 mm, 1.6 mm, 1.7 mm, 1.8 mm, 1.9 mm, 2 mm, etc.

In this embodiment, the pre-welding width of the second converging portion 1322 is set to be greater than or equal to 1.5 mm, so that the pre-welding of the tab 132 has a sufficient width size, and thus when the tab 132 is bent or abuts against the first inclined plane 12211, etc., the overall structural strength of the tab 132 at the pre-welding position is sufficient to resist the tensile deformation and other stresses generated by the tab 132, so that the tab 132 maintains a good and stable structural state during assembly, thereby making the welding and fixing operation of the tab 132 and the terminal post 12 more stable and smooth.

In some embodiments of the present application, as shown in FIG. 13, the battery cell 10 may further comprise: a cover plate 15, the cover plate 15 covers an end of the connecting hole 1223 away from the electrode assembly 13, and the cover plate 15 is hermetically connected to the terminal post 12.

The cover plate 15 can be made of copper, zinc, aluminum, copper-aluminum alloy and other materials. The shape of the cover plate 15 can be adapted to the cross-sectional shape of the connecting hole 1223, and the thickness of the cover plate 15 can be reasonably set as needed. When the battery cell 10 is assembled, after the tab 132 is assembled with the terminal post 12 and the matching block 14, the cover plate 15 is arranged at an end of the connecting hole 1223 away from the electrode assembly 13.

In this embodiment, the cover plate 15 is provided to be hermetically connected to the terminal post 12, which can reliably seal the structure composed of the matching block 14 and the tab 132 located in the connecting hole 1223, so that the tab 132 and the terminal post 12 can be in a good closed environment after being welded and fixed, and thus the tab 132 and the terminal post 12 can be stably and well connected during long-term use. The cover plate 15 can match with the terminal post 12 to transmit electricity, and the cover plate 15 can form a good electrical connection surface, so that the battery cell 10 can be more conveniently connected to the electrical connector when in use.

In an embodiment of the present application, referring to FIG. 13 and FIG. 4, a groove 1224 may be formed on a side surface of the terminal post 12 away from the electrode assembly 13, a connecting hole 1223 is formed on the inner side of the groove 1224 and runs through the bottom wall of the groove 1224, and a cover plate 15 is disposed in the groove 1224.

The shape of the groove 1224 may match the shape and structure of the periphery of the cover plate 15, and the depth of the groove 1224 may be adapted to the thickness of the cover plate 15. The axis of the groove 1224 can be colinear with the axis of the connecting hole 1223. When the cover plate 15 is assembled with the terminal post 12, a side surface of the cover plate 15 facing the electrode assembly 13 abuts against the bottom of the groove 1224, and the peripheral edge of the cover plate 15 abuts against the groove wall of the groove 1224.

In this embodiment, the groove 1224 is arranged on the terminal post 12, so that it is convenient to position the cover plate 15 and the terminal post 12 when fixing them, and they are connected and fixed stably and reliably.

In some examples of the present application, referring to FIG. 13 and FIG. 4, in the direction from the electrode assembly 13 toward the cover plate 15, the side wall of the groove 1224 may extend outward obliquely along the radial direction of the connecting hole 1223.

The side wall of the groove 1224 obliquely extends outward along the radial direction of the connecting hole 1223, and the inclination angle of the side wall can be reasonably set according to the mounting and fixing requirements of the cover plate 15. The extension direction of the side wall of the groove 1224 can be consistent with the extension direction of the periphery of the cover plate 15, and the side wall of the groove 1224 can abut against the peripheral wall of the cover plate 15.

In this embodiment, the side wall of the groove 1224 obliquely extends outward along the radial direction of the connecting hole 1223, which can play a certain guiding role when assembling the cover plate 15 and the terminal post 12, so that the cover plate 15 can be more conveniently fixed in the groove 1224, with a simple structure and easy assembly. When the cover plate 15 is welded and connected to the terminal post 12, the periphery of the cover plate 15 and the inclined side wall of the groove 1224 can increase the welding width during welding, so that the cover plate 15 and the terminal post 12 have higher welding quality, and the cover plate 15 and the terminal post 12 can have better welding sealing effect.

In some examples of the present application, referring to FIG. 13 and FIG. 4, a side surface of the cover plate 15 away from the electrode assembly 13 may be flush with the surface of an end of the terminal post 12 away from the electrode assembly 13.

After the cover plate 15 is assembled with the terminal post 12, the cover plate 15 can match with the terminal post 12 to form a continuous plane on a side of the terminal post 12 away from the electrode assembly 13. Specifically, a side surface of the second ring 123 away from the electrode assembly 13 can be flush with a side surface of the terminal post 12 away from the electrode assembly 13 and a side surface of the cover plate 15 away from the electrode assembly 13. The cover plate 15 can be bonded or welded to the terminal post 12.

In this embodiment, a side surface of the cover plate 15 away from the electrode assembly 13 is flush with the surface of an end of the terminal post 12 away from the electrode assembly 13, so that the cover plate 15 and the terminal post 12 can match to form a continuous plane, thereby reducing the space occupied by the cover plate 15 to a certain extent and increasing the electrical connection surface of the terminal post 12 of the battery cell 10, and thus the energy density of the battery cell 10 can be improved to a certain extent, and the battery cell 10 can be conveniently electrically connected to the electrical connector through an end of the terminal post 12 away from the electrode assembly 13.

The method for manufacturing a battery cell 10 according to the embodiments of the second aspect of the present application is described below with reference to FIG. 3 to FIG. 8. The battery cell 10 is a battery cell 10 according to the embodiments of the first aspect of the present application, and the manufacturing method comprises: extending one end of the tab 132 into the connecting hole 1223 of the terminal post 12; making a side surface of the end of the tab 132 in the thickness direction abut against the first inclined plane 12211; welding the end of the tab 132 to the first inclined plane 12211.

One end of the tab 132 refers to an end of the tab 132 away from the electrode assembly 13, that is, the second converging portion 1322 of the tab 132. The tab 132 is led out from the electrode assembly 13, and one end of the tab 132 extends toward the connecting hole 1223 of the terminal post 12 and extends into the connecting hole 1223. The tab 132 is composed of a plurality of tab sheets, and the plurality of tab sheets are stacked. When the tab 132 extends into the connecting hole 1223 and abuts against the first inclined plane 12211, a side surface of the tab 132 in the stacking direction of the tab sheets is in contact with and abuts against the first inclined plane 12211. The first inclined plane 12211 is an inclined plane that is inclined radially outward in the axial direction of the terminal post 12. After the tab 132 extends into the connecting hole 1223, it is bent and inclined toward the first inclined plane 12211 to be in contact with and abut against the first inclined plane 12211.

For the method for manufacturing a battery cell 10 according to the embodiments of the present application, by making the tab 132 extend into the connecting hole 1223 of the terminal post 12 and allowing it to abut against the first inclined plane 12211 and welding and fixing them, the tab 132 can occupy less space in the battery cell 10, reducing the weight of the tab 132 and the terminal post 12, thereby greatly improving the energy density of the battery cell 10.

In some embodiments of the present application, allowing a side surface at an end of the tab 132 in the thickness direction to abut against the first inclined plane 12211 comprises: placing the matching block 14 into the connecting hole 1223, and pressing the end of the tab 132 toward the first inclined plane 12211 through the matching block 14 until it abuts against the first inclined plane 12211.

When the matching block 14 is placed in the connecting hole 1223, one end of the tab 132 is located between the second inclined plane 141 and the first inclined plane 12211 of the matching block 14. As the matching block 14 moves toward the electrode assembly 13, the tab 132 is gradually tilted and bent toward the first inclined plane 12211 under the pushing action of the second inclined plane 141 and finally abuts against the first inclined plane 12211.

In this embodiment, the matching block 14 presses one end of the tab 132 toward the first inclined plane 12211, so that the tab 132 can stably and reliably come into contact with and abut against the first inclined plane 12211 under the action of the matching block 14, thereby making it easier and more convenient for the tab 132 to abut against and be fixed to the first inclined plane 12211.

In an embodiment of the present application, the manufacturing method further comprises: making the cover plate 15 cover an end of the connecting hole 1223 away from the electrode assembly 13, and welding the cover plate 15 to the terminal post 12.

A groove 1224 is formed at an end of the terminal post 12 away from the electrode assembly 13, and the cover plate 15 is assembled in the groove 1224 and covers the connecting hole 1223. The cover plate 15 is assembled with the terminal post 12 and then welded to the terminal post 12.

In this embodiment, the cover plate 15 is welded to and covers an end of the terminal post 12 away from the electrode assembly 13, which can increase the electrical connection surface of the terminal post 12 and seal the electrode assembly 13 and the tab 132 in the case 11, so that it is more convenient to connect the battery cell 10 to the electrical connector when in use, and the battery cell 10 is more stable to use.

In some embodiments of the present application, before allowing one end of the tab 132 to extend into the connecting hole 1223 of the terminal post 12, the manufacturing method further comprises: connecting a plurality of tab sheets of the tab 132 into a whole by pre-welding.

A plurality of tab sheets are stacked to form a tab 132, and the plurality of tab sheets can be connected into a whole by ultrasonic pre-welding to form an end of the tab 132.

In this embodiment, the plurality of tab sheets of the tab 132 are connected into a whole by pre-welding, which can reduce the gap between the tab sheets and make one end of the tab 132 more compact, thereby facilitating the subsequent extension of the tab 132 into the connecting hole 1223, as well as other operations.

The battery 100 according to the embodiments of the third aspect of the present application will be described below with reference to FIG. 2 to FIG. 13.

As shown in FIG. 2 to FIG. 13, the battery 100 according to the embodiments of the present application comprises the battery cell 10 according to the embodiments of the first aspect of the present application.

Other structures and operations of the battery 100 according to the embodiments of the present application are known to those of ordinary skill in the art and will not be described in detail here.

For the battery cell 100 according to the embodiments of the present application, the battery cell 10 according to the embodiments of the first aspect of the present application is provided, a connecting hole 1223 passing through the terminal post 12 is provided on the terminal post 12 and at least part of the inner wall of the connecting hole 1223 is formed as a first inclined plane 12211, and one end of the tab 132 extends into the connecting hole 1223 and is fixed and connected to the first inclined plane 12211. This allows the tab 132 to occupy less space in the battery cell 10, reducing the weight of the tab 132 and the terminal post 12, thereby greatly improving the energy density of the battery cell 10.

An electrical apparatus 1000 according to the embodiments of the fourth aspect of the present application is described below with reference to FIG. 1 to FIG. 13.

As shown in FIG. 1 to FIG. 13, the battery 100 according to the embodiments of the present application comprises the battery cell 10 according to the embodiments of the third aspect of the present application.

Other structures and operations of the electrical apparatus 1000 according to the embodiments of the present application are known to those of ordinary skill in the art and will not be described in detail here.

For the electrical apparatus 1000 according to the embodiments of the present application, the battery 100 according to the embodiments of the third aspect of the present application is provided, a connecting hole 1223 passing through the terminal post 12 is provided on the terminal post 12 and at least part of the inner wall of the connecting hole 1223 is formed as a first inclined plane 12211, and one end of the tab 132 extends into the connecting hole 1223 and is fixed and connected to the first inclined plane 12211. This allows the tab 132 and the terminal post 12 to occupy less space in the battery cell 10, reducing the weight of the tab 132 and the terminal post 12, thereby greatly improving the energy density of the battery cell 10.

The electrical apparatus 1000 according to two specific embodiments of the present application will be described below with reference to FIG. 1 to FIG. 13.

### Embodiment 1,

As shown in FIG. 1 and FIG. 2, the electrical apparatus 1000 according to the fourth aspect of the present application is a vehicle, the electrical apparatus 1000 comprises a battery 100 according to the second aspect of the present application, and the battery 100 is used to provide or store electric energy.

As shown in FIGS. 3 to 8 and 13, the battery 100 comprises a case 11, a terminal post 12, a cover plate 15, a matching block 14, an electrode assembly 13 and a terminal post 12. The case 11 has an accommodating cavity 112 and a mounting hole. Two mounting holes are provided and are communicated with the accommodating cavity 112. The electrode assembly 13 is arranged in the accommodating cavity 112. The electrode assembly 13 comprises an electrode plate and a separator. The electrode plate has a current collector and an active material layer. The active material layer is coated on the current collector to form an active material coating portion 131 of the electrode assembly 13. A portion of the current collector not coated with the active material layer protrudes from the active material coating portion 131 to form tab sheets. There are a plurality of tab sheets. The plurality of tab sheets are gathered toward one end of the mounting hole to form a tab 132. An end of the tab 132 facing the active material coating portion 131 forms a first converging portion 1321. The tab 132 is stacked toward one end of the terminal post 12 to form a second converging portion 1322. The tab 132 includes a positive tab 132 and a negative tab 132.

Two terminal posts 12 are provided, and the terminal posts 12 are arranged in one-to-one correspondence with the mounting holes, and the terminal posts 12 are inserted into the mounting holes. The terminal post 12 comprises a terminal post body 122, a first ring 121 and a second ring 123. The terminal post body 122 is a hollow annular structure. The first ring 121 and the terminal post body 122 are integrally formed and are located in the accommodating cavity 112. The first ring 121 is arranged on the outer peripheral surface of the terminal post body 122. A side surface of the first ring 121 facing the electrode assembly 13 is flush with a side surface of the terminal post body 122 facing the electrode assembly 13 and the other side abuts against the inner wall of the case 11. The second ring 123 and the terminal post body 122 are integrally formed and are located outside the case 11. The second ring 123 is arranged on the outer peripheral surface of the terminal post body 122. A side surface of the second ring 123 away from the electrode assembly 13 is flush with a side surface of the terminal post body 122 away from the electrode assembly 13 and the other side abuts against the case 11.

A connecting bump 1221 is formed on the inner wall of the terminal post 12, and the connecting bump 1221 matches with the terminal post body 122 to form a connecting hole 1223. A side surface of the connecting bump 1221 facing the electrode assembly 13 is flush with a side surface of the terminal post 12 and the first ring 121 facing the electrode assembly 13. A side surface of the connecting bump 1221 away from the electrode assembly 13 is formed with a first inclined plane 12211, and the first inclined plane 12211 extends obliquely from an end facing the electrode assembly 13 to an end away from the electrode assembly 13 toward the inner wall surface of the terminal post 12.

The matching block 14 is arranged in the connecting hole 1223 and has a second inclined plane 141 parallel to the first inclined plane 12211. The matching block 14 and the connecting bump 1221 are spaced apart from each other in the radial direction of the connecting hole 1223. The matching block 14 abuts against the hole wall of the connecting hole 1223. One end of the tab 132 extends into the connecting hole 1223 and is clamped and fixed between the first inclined plane 12211 and the second inclined plane 141.

A groove 1224 is formed at an end of the terminal post 12 away from the electrode assembly 13, a connecting hole 1223 runs through the bottom of the groove 1224, and the groove mouth of the groove 1224 gradually increases. The cover plate 15 is provided in the groove 1224 and covers the connecting hole 1223.

When the battery cell 10 is assembled, the plurality of tab sheets in the electrode assembly 13 are formed into a whole by pre-welding, the electrode assembly 13 is placed in the accommodating cavity 112 of the case 11, the terminal post 12 is placed at the mounting hole and fixed to the case 11 through the first ring 121 and the second ring 123 and abuts against the electrode assembly 13. One end of the tab 132 extends into the connecting hole 1223, the matching block 14 is placed in the connecting hole 1223 and moves toward the electrode assembly 13. The tab 132 is clamped between the first inclined plane 12211 and the second inclined plane 141 under the cooperation of the matching block 14 and the connecting bump 1221, the welding device welds the tab 132, the terminal post 12 and the matching block 14. After the welding is completed, the cover plate 15 covers the groove 1224 of the terminal post 12 and is welded and fixed to the terminal post 12, thereby completing the assembly of the battery cell 10.

For the electrical apparatus 1000 according to the embodiments of the present application, a connecting hole 1223 passing through the terminal post 12 is provided on the terminal post 12 and at least part of the inner wall of the connecting hole 1223 is formed as a first inclined plane 12211, and one end of the tab 132 extends into the connecting hole 1223 and is fixed and connected to the first inclined plane 12211. This allows the tab 132 to occupy less space in the battery cell 10, reducing the weight of the tab 132 and the terminal post 12, thereby greatly improving the energy density of the battery cell 10.

### Embodiment 2,

As shown in FIG. 9 to FIG. 12, the structure of this embodiment is roughly the same as that of Embodiment 1, wherein the same components are marked with the same reference numerals, and the only difference is that: a supporting protrusion 1222 is formed on the inner wall of the connecting hole 1223, which is opposite to the connecting bump 1221 in the radial direction of the connecting hole 1223, and the matching block 14 is fixed on the supporting protrusion. The inclination angle of the first inclined plane 12211 is further limited to 0°-20°, so that it can have a certain limiting effect on the movement of the matching block 14, reduce the probability of overpressing of the matching block 14 on the tab 132, make the matching block 14 match with the tab 132 and the terminal post 12 better, and it more convenient and easier for the welding device to weld and connect the tab 132, the tab 132 and the matching block 14.

Finally, it should be noted that: the above embodiments are merely used for illustrating rather than limiting the technical solutions of the present application. Although the present application has been described in detail with reference to the aforementioned embodiments, those of ordinary skill in the art should understand that the technical solutions specified in the various aforementioned embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. A battery cell, comprising:
a case (11), comprising a first wall (111);
a terminal post (12), arranged on the first wall (111) and formed with a connecting hole (1223) passing through the terminal post (12), wherein at least part of an inner peripheral wall of the connecting hole (1223) is formed as a first inclined plane (12211), and the first inclined plane (12211) is obliquely arranged relative to the axis of the connecting hole (1223);
an electrode assembly (13), comprising an active material coating portion (131) and a tab (132), wherein the active material coating portion (131) is disposed in the case (11), the tab (132) is electrically connected to the active material coating portion (131), and at least part of the tab (132) extends into the connecting hole (1223) and is connected to the first inclined plane (12211).

2. The battery cell according to claim 1, wherein the tab (132) is connected to the terminal post (12) by welding.

3. The battery cell according to claim 1, wherein in a direction from the electrode assembly (13) toward the terminal post (12), the first inclined plane (12211) obliquely extends outward along the radial direction of the connecting hole (1223).

4. The battery cell according to any one of claims 1 to 3, wherein the angle between the first inclined plane (12211) and a first plane perpendicular to the axis of the connecting hole (1223) is 0°-70°; or
the angle between the first inclined plane (12211) and the first plane is 30°-60°.

5. The battery cell according to any one of claims 1 to 4, wherein the terminal post (12) comprises: a terminal post (12) body, the terminal post (12) body is a hollow ring, a raised connecting bump (1221) is provided on the inner wall surface of the terminal post (12) body, the terminal post (12) body and the connecting bump (1221) match to define the connecting hole (1223), and the first inclined plane (12211) is formed on the connecting bump (1221).

6. The battery cell according to claim 5, wherein in the axial direction of the connecting hole (1223), at least part of a side surface of the connecting bump (1221) away from the electrode assembly (13) is formed as the first inclined plane (12211).

7. The battery cell according to claim 6, wherein the first inclined plane (12211) has a weld area, and the tab (132) is connected to the welding area by welding,
in the axial direction of the connecting hole (1223), the thickness of the connecting bump (1221) at the welding area is a first thickness, the depth of the weld pool formed at the welding area of the connecting bump (1221) when the tab (132) and the connecting bump (1221) are welded is a first depth, and the first thickness is greater than the first depth.

8. The battery cell according to claim 7, wherein the difference between the first thickness and the first depth is greater than or equal to 0.2 mm.

9. The battery cell according to claim 8, wherein the difference between the first thickness and the first depth is greater than or equal to 0.5 mm.

10. The battery cell according to any one of claims 6 to 9, wherein the first inclined plane (12211) is arcedly connected to a side surface of the connecting bump (1221) facing the electrode assembly (13).

11. The battery cell according to any one of claims 6 to 10, wherein a side surface of the connecting bump (1221) facing the electrode assembly (13) is flush with a side surface of the terminal post (12) body facing the electrode assembly (13).

12. The battery cell according to any one of claims 6 to 11, wherein the minimum width of the connecting hole (1223) is greater than or equal to 3 mm.

13. The battery cell according to any one of claims 6 to 12, wherein the ratio of the minimum width of the connecting hole (1223) to the thickness of the tab (132) is 1.5-5; or the ratio of the minimum width of the connecting hole (1223) to the thickness of the tab (132) is 2.5-5.

14. The battery cell according to any one of claims 6 to 13, wherein the ratio of the minimum width of the connecting hole (1223) to the maximum width of the connecting hole (1223) is 0.3-0.5; or the ratio of the minimum width of the connecting hole (1223) to the maximum width of the connecting hole (1223) is 0.35-0.45.

15. The battery cell according to any one of claims 5 to 14, wherein the terminal post (12) further comprises:
a first ring (121), wherein the first ring (121) is connected to an end of the terminal post (12) body facing the electrode assembly (13), the first ring (121) extends outwards along the radial direction of the terminal post (12) body and extends in a ring shape along the circumferential direction of the terminal post (12) body;
a second ring (123), wherein the second ring (123) is connected to the other end of the terminal post (12) body away from the electrode assembly (13), the second ring (123) extends outwards along the radial direction of the terminal post (12) body and extends in a ring shape along the circumferential direction of the terminal post (12) body.

16. The battery cell according to any one of claims 1 to 15, further comprising: a matching block (14), wherein the matching block (14) is arranged in the connecting hole (1223), and the tab (132) abuts between the matching block (14) and the first inclined plane (12211).

17. The battery cell according to claim 16, wherein the matching block (14) has a second inclined plane (141) parallel to the first inclined plane (12211), and the tab (132) abuts between the first inclined plane (12211) and the second inclined plane (141).

18. The battery cell according to claim 17, wherein in the axial direction of the connecting hole (1223), the surface of an end of the matching block (14) facing the electrode assembly (13) abuts against the electrode assembly (13).

19. The battery cell according to claim 18, wherein the matching block (14) is connected to the terminal post (12) by welding.

20. The battery cell according to any one of claims 17 to 19, wherein a supporting protrusion (1222) is formed on the peripheral wall of the connecting hole (1223), the supporting protrusion (1222) and the first inclined plane (12211) are spaced apart in the circumferential direction of the connecting hole (1223), and one end of the matching block (14) is supported on the supporting protrusion (1222).

21. The battery cell according to claim 20, wherein the angle of the first inclined plane (12211) and the second inclined plane (141) relative to a first plane perpendicular to the axis of the connecting hole (1223) is 0°-60°.

22. The battery cell according to claim 21, wherein the angle of the first inclined plane (12211) and the second inclined plane (141) relative to the first plane is 0°-20°.

23. The battery cell according to any one of claims 20 to 22, wherein the other end of the matching block (14) extends to the other side wall of the connecting hole (1223) opposite to the supporting protrusion (1222).

24. The battery cell according to claim 23, wherein the matching block (14), the tab (132) and the terminal post (12) are welded and connected into a whole.

25. The battery cell according to any one of claims 16 to 24, wherein the material of the matching block (14) is the same as the material of the terminal post (12).

26. The battery cell according to any one of claims 1 to 25, wherein the active material coating portion (131) comprises a current collector and an active material layer disposed on the current collector, the tab (132) is electrically connected to the current collector, the tab (132) comprises a plurality of tab (132) sheets, the plurality of tab (132) sheets converge at a position close to the current collector to form a first converging portion (1321), the plurality of tab (132) sheets converge at a position away from the current collector and are connected to form a second converging portion (1322), the first converging portion (1321) connects the second converging portion (1322) and the active material coating portion (131), and at least part of the second converging portion (1322) extends into the connecting hole (1223) and is connected to the first inclined plane (12211).

27. The battery cell according to claim 26, wherein at least part of the first converging portion (1321) extends into the connecting hole (1223) and extends along the first inclined plane (12211).

28. The battery cell according to claim 26, wherein the ratio of the overlapping width between the second converging portion (1322) and the first inclined plane (12211) on the first inclined plane (12211) to the width of the first inclined plane (12211) is greater than or equal to 0.5.

29. The battery cell according to claim 28, wherein the ratio of the overlapping width between the second converging portion (1322) and the first inclined plane (12211) to the width of the first inclined plane (12211) is 0.8-1.2.

30. The battery cell according to any one of claims 1 to 29, further comprising: a cover plate (15), wherein the cover plate (15) covers an end of the connecting hole (1223) away from the electrode assembly (13), and the cover plate (15) is hermetically connected to the terminal post (12).

31. The battery cell according to claim 30, wherein a groove (1224) is formed on a side surface of the terminal post (12) away from the electrode assembly (13), the connecting hole (1223) is formed on the inner side of the groove (1224) and passes through the bottom wall of the groove (1224), and the cover plate (15) is arranged in the groove (1224).

32. The battery cell according to claim 31, wherein in a direction from the electrode assembly (13) toward the cover plate (15), the side wall of the groove (1224) obliquely extends outward along the radial direction of the connecting hole (1223).

33. The battery cell according to claim 31, wherein a side surface of the cover plate (15) away from the electrode assembly (13) is flush with the surface of an end of the terminal post (12) away from the electrode assembly (13).

34. A method for manufacturing a battery cell, wherein the battery cell is the battery cell according to any one of claims 1 to 33, and the manufacturing method comprises:
making one end of the tab (132) extend into the connecting hole (1223) of the terminal post (12);
making a side surface of the end of the tab (132) in the thickness direction abut against the first inclined plane (12211);
welding the end of the tab (132) to the first inclined plane (12211).

35. The method for manufacturing a battery cell according to claim 34, wherein the step of making a side surface of the end of the tab (132) in the thickness direction abut against the first inclined plane (12211) comprises:
placing the matching block (14) in the connecting hole (1223), and pressing the end of the tab (132) toward the first inclined plane (12211) by the matching block (14) until it abuts against the first inclined plane (12211).

36. A battery, comprising the battery cell according to any one of claims 1 to 33.

37. An electrical apparatus, comprising the battery according to claim 36, wherein the battery is configured to provide electric energy.
